# EUROPEAN PATENT APPLICATION

(11) **EP 4 089 594 A1**
(43) Date of publication of application: **16.11.2022**
(21) Application number: 21738948.5
(22) Date of filing: 08.01.2021
(51) Int. Cl.: G06N 20/00, G06F 30/27, G06F 30/20

(54) **INFORMATION PROCESSING SYSTEM, INFORMATION PROCESSING METHOD, AND PROGRAM**

(30) Priority: 08.01.2020 JP 2020001766
(71) Applicant: Research Institute for Computational Science Co. Ltd., Tokyo, 100-0005 (JP)
(72) Inventor: HORIE Masanobu, Tokyo 100-0005 (JP); MORITA Naoki, Tokyo 100-0005 (JP); IHARA Yu, Tokyo 100-0005 (JP)
(74) Representative: Grünecker Patent- und Rechtsanwälte PartG mbB
(86) International application number: PCT/JP2021/000582
(87) International publication number: WO 2021/141131

(57) **Abstract**

[Problem] To use machine learning to perform numerical analysis appropriately.

[Solution] An information processing system 1 is provided with an objective data acquisition unit 212 and a numerical analysis processing unit 213 (or structure inference unit 316). The objective data acquisition unit 212 acquires data of the object of numerical analysis (or a design simulation of a construction) expressed as a mesh shape. The numerical analysis processing unit 213 (or structure inference unit 316) uses a machine learning model obtained by performing machine learning on the result of numerical analysis of physical properties (or a design simulation of a construction) in units of relationships between two adjacent nodes in graph data corresponding to a mesh shape to acquire an inference result inferring a result of numerical analysis (or a result of a design simulation of a construction) for the object of numerical analysis (or a design simulation of a construction). [Selected Figure] Figure 10

## Description

### [Technical Field]

The present invention relates to an information processing system, an information processing method, and a program.

### [Background Art]

Recently, techniques for analyzing physical properties using machine learning have been achieved.

In such analysis techniques, the input data to be analyzed is inputted into a machine learning model, and output data expressing an analysis result with respect to the input data is calculated.

A technology related to analysis techniques using machine learning is disclosed in Patent Literature 1, for example.

### [Citation List]

### [Patent Literature]

Patent Literature 1: Japanese Patent Laid-Open No. 2019-128815

### [Summary of Invention]

### [Technical Problem]

In analysis techniques using machine learning of the related art, typically, an affine transformation matrix having a number of columns corresponding to the size of the input matrix (a matrix composed of the input data) is used.

The affine transformation matrix is tuned for machine learning, and the more appropriate the affine transformation matrix, the higher is the machine learning performance.

However, in the case of using an analysis technique using machine learning for numerical analysis in simulations of physical properties, inverse simulation problems, or the like, the size of the input matrix is not invariant, and consequently the analysis techniques using machine learning of the related art cannot be used as-is.

In other words, in the technology of the related art, it is difficult to use machine learning to perform numerical analysis appropriately.

The present invention addresses the problem of using machine learning to perform numerical analysis appropriately.

### [Solution to Problem]

In order to achieve the object described above, an information processing system according to an aspect of the present invention comprising:
objective data acquisition means that acquires data of an object of numerical analysis expressed as a mesh shape; and
inference means that uses a machine learning model obtained by performing machine learning on a result of numerical analysis of physical properties in units of relationships between two adjacent nodes in graph data corresponding to the mesh shape to acquire an inference result inferring a result of numerical analysis for the object of numerical analysis.

An information processing system according to another aspect of the present invention comprising:
optimization parameter setting means that sets parameters to be optimized in a range of performance that is achievable with respect to demanded specifications of a construction to be designed;
evaluation value acquisition means that acquires an evaluation value expressed by an evaluation function of a designed construction with respect to the parameters to be optimized;
specific evaluation value acquisition means that acquires a specific evaluation value corresponding to at least one of a global maximum value or a local maximum value of the evaluation value; and
structure inference means that acquires an inference result obtained by using a machine learning model to infer a structure of a construction according to the parameters to be optimized which correspond to the specific evaluation value.

### [Advantageous Effect of Invention]

According to the present invention, machine learning can be used to perform numerical analysis appropriately.

### [Brief Description of Drawings]

[Fig. 1] Figure 1 is a schematic diagram illustrating an overall system configuration of an information processing system 1 according to the first embodiment of the present invention.
[Fig. 2] Figure 2 is a diagram illustrating the hardware configuration of an information processing apparatus 800 configuring each apparatus.
[Fig. 3] Figure 3 is a block diagram illustrating a functional configuration of the user terminal 10.
[Fig. 4] Figure 4 is a schematic diagram illustrating an example of the training data upload screen.
[Fig. 5] Figure 5 is a schematic diagram illustrating an example of the output information setting screen.
[Fig. 6] Figure 6 is a schematic diagram illustrating an example of the model selection screen.
[Fig. 7] Figure 7 is a schematic diagram illustrating an example of the objective data input screen.
[Fig. 8] Figure 8 is a schematic diagram illustrating an example of the numerical analysis result display screen.
[Fig. 9] Figure 9 is a block diagram illustrating a functional configuration of the numerical analysis server 20.
[Fig. 10] Figure 10 is a schematic diagram illustrating a method by which the machine learning model acquisition unit 211 constructs a machine learning model.
[Fig. 11] Figure 11 is a schematic diagram illustrating an example of the case where graph data corresponding to a mesh shape expressing the structure of an object is treated as the input data, and the output data is also mesh shape data (graph data).
[Fig. 12] Figure 12 is a schematic diagram illustrating an example of the case where mesh shape data (graph data corresponding to a mesh shape) expressing the structure of an object is treated as the input data, and the output data is vector data.
[Fig. 13] Figures 13 is flowcharts illustrating the flow of a UI control process executed by the user terminal 10.
[Fig. 14] Figures is flowcharts illustrating the flow of a UI control process executed by the user terminal 10.
[Fig. 15] Figure 15 is a flowchart illustrating the flow of a machine learning model construction process executed by the numerical analysis server 20.
[Fig. 16] Figure 16 is a flowchart illustrating the flow of a numerical analysis process executed by the numerical analysis server 20.
[Fig. 17] Figure 17 is a schematic diagram illustrating an example of the objective data input screen.
[Fig. 18] Figure 18 is a schematic diagram illustrating an example of the optimization parameter setting screen.
[Fig. 19] Figure 19 is a schematic diagram illustrating a state in which the image of the data of the prototype of the construction is displayed so as to change according to the input content regarding the range of variation and the direction of variation to be implemented during optimization.
[Fig. 20] Figure 20 is a schematic diagram illustrating an example of the weight setting screen.
[Fig. 21] Figure 21 is a schematic diagram illustrating an example of the inference result display screen.
[Fig. 22] Figure 22 is a block diagram illustrating a functional configuration of the numerical analysis server 20.
[Fig. 23] Figure 23 is a schematic diagram illustrating an example of the relationship between the attributes to be optimized and the Pareto frontier (the limit region of the Pareto solution) in a design simulation of a construction.
[Fig. 24] Figure 24 is a schematic diagram illustrating an example of a state in which a constraint is set on an attribute to be optimized in a design simulation of a construction.
[Fig. 25] Figure 25 is a schematic diagram illustrating values of the evaluation function in the space fulfilling the constraint set inside the Pareto frontier.
[Fig. 26] Figures 26 is flowcharts for describing the flow of a UI control process executed by the user terminal 10.
[Fig. 27] Figures 27 is flowcharts for describing the flow of a UI control process executed by the user terminal 10.
[Fig. 28] Figure 28 is a flowchart illustrating the flow of a design simulation process executed by the numerical analysis server 20.
[Fig. 29] Figure 29 is a block diagram illustrating a functional configuration in the case where the functions of the information processing system 1 in the first embodiment are implemented in a single information processing apparatus 800.
[Fig. 30] Figure 30 is a block diagram illustrating a functional configuration in the case where the functions of the information processing system 1 in the second embodiment are implemented in a single information processing apparatus 800.

### [Description of Embodiments]

Hereinafter, embodiments of the present invention will be described with reference to the drawings.

### [First embodiment]

### [Overview of numerical analysis according to present embodiment]

An information processing system according to the present embodiment performs numerical analysis of physical properties related to an object by using a machine learning model constructed by recognizing, through machine learning, a mesh shape expressing an object of numerical analysis in a simulation, inverse simulation problem, or the like and a distribution of data for numerical analysis (for example, simulation data such as material properties and temperature). Specifically, in the information processing system according to the present embodiment, objective physical properties are inferred using a machine learning model that treats given physical properties related to an object of numerical analysis as the input and intended physical properties as the output.

The numerical analysis of physical properties to be executed at this time is provided with an algorithm that tolerates changes in the number of data points inputted into the machine learning model. That is, in the algorithm of numerical analysis used in the present embodiment, a mesh shape pseudo-expressing an object is treated as a graph composed of nodes and edges, and in graph data corresponding to the mesh shape expressing the structure of the object, the relationship between each node of interest and a single adjacent node is transformed by the machine learning model and the transformation results for all nodes adjacent to the node of interest are consolidated (for example, added together) to obtain an inference result for the node of interest. Furthermore, the transformation results for all nodes forming the mesh shape of the object are consolidated to obtain an inference result for the entire object.

This arrangement makes it possible to use an affine transformation matrix whose size can be defined statically from the relationship between two nodes to perform numerical analysis using a machine learning model on the basis of graph data corresponding to the mesh shape of the object of numerical analysis.

In other words, in the case where the object of numerical analysis in a simulation, inverse simulation problem, or the like is pseudo-expressed by a mesh shape, the numbers of nodes and edges forming the graph data corresponding to the mesh shape may change, but by treating the relationships with single adjacent nodes as the units of simulation, it is no longer necessary to change the size of the affine transformation matrix used in machine learning. Additionally, by consolidating the results of numerical analysis for all nodes forming the graph data corresponding to the mesh shape, numerical analysis of the physical properties related to the object can be performed.

Consequently, according to the information processing system according to the present embodiment, it is possible to use machine learning to perform numerical analysis appropriately.

Note that in the present embodiment, mesh shape data is taken to refer to graph data composed of nodes and edges expressing a mesh shape as well as graph data in which data about physical properties (such as material properties or temperature data, for example) is assigned to at least one of the nodes or edges.

Also, the purpose of the numerical analysis in the present embodiment may be a forward calculation that analyzes a resulting state from an initial state as a forward simulation problem and an inverse calculation that analyzes the conditions for reaching a resulting state as an inverse simulation problem. As one example, in the case where numerical analysis is performed in a forward calculation of a simulation in the information processing system according to the present embodiment, the processing can be sped up compared to the case where forward calculation is performed according to existing simulation techniques. For instance, in the case where performing a forward calculation using existing simulation techniques would require a calculation time of several days or more, the processing can be sped up approximately 100-fold with the information processing system according to the present embodiment. Furthermore, in the case where numerical analysis is performed in an inverse calculation of a simulation in the information processing system according to the present embodiment, the processing can be sped up compared to the case where inverse calculation is performed according to existing simulation techniques. For instance, in the case where performing an inverse calculation using existing simulation techniques would require a calculation time of several days or more for a single pattern and necessitate the calculation of approximately 1000 patterns, the processing can be sped up approximately 100,000-fold with the information processing system according to the present embodiment.

### [Configuration]

### [System configuration]

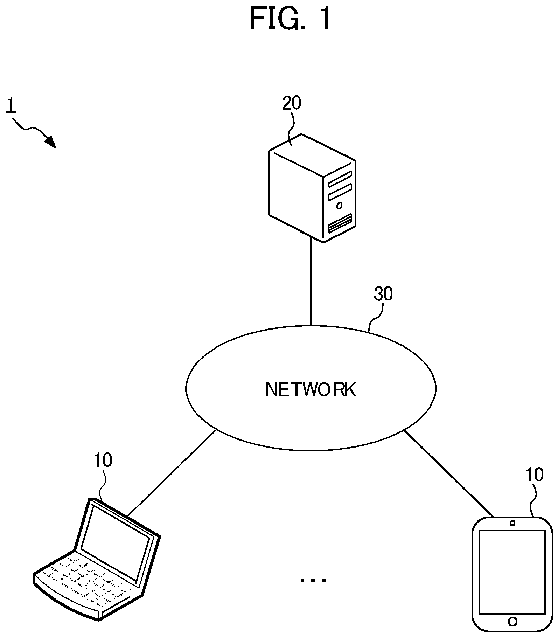

Figure 1 is a schematic diagram illustrating an overall system configuration of an information processing system 1 according to the first embodiment of the present invention.

As illustrated in Figure 1, the information processing system 1 includes a plurality of user terminals 10 and a numerical analysis server 20, in which the plurality of user terminals 10 and the numerical analysis server 20 are configured to communicate with each other over a network 30 such as the Internet.

The user terminal 10 is an information processing apparatus used by a user who performs numerical analysis of physical properties related to an object, receives the input of various information (such as attribute values (coefficient of expansion, Young's modulus, and the like) defining physical properties and the initial values of parameters) for performing numerical analysis of physical properties, and sends requests related to numerical analysis of physical properties to the numerical analysis server 20. In addition, the user terminal 10 displays the result of numerical analysis of physical properties transmitted from the numerical analysis server 20 and downloads data about the result of numerical analysis of physical properties.

If a request related to numerical analysis of physical properties is received from the user terminal 10, the numerical analysis server 20 performs numerical analysis in a simulation, an inverse simulation problem, or the like using a machine learning model that treats given physical properties related to an object of numerical analysis as the input and the intended physical properties as the output, on the basis of various information for performing numerical analysis of physical properties. In addition, the numerical analysis server 20 constructs a machine learning model in which numerical analysis results for intended physical properties (such as the diffusion of temperature and the transfer of force) have been learned, and stores the constructed machine learning model as a machine learning model to be used in numerical analysis of physical properties.

### [Hardware Configuration]

The hardware configuration of each apparatus in the information processing system 1 will be described.

In the information processing system 1, each apparatus is configured by using an information processing apparatus, such as a PC, a server computer, or a tablet terminal, and the basic configuration is substantially the same.

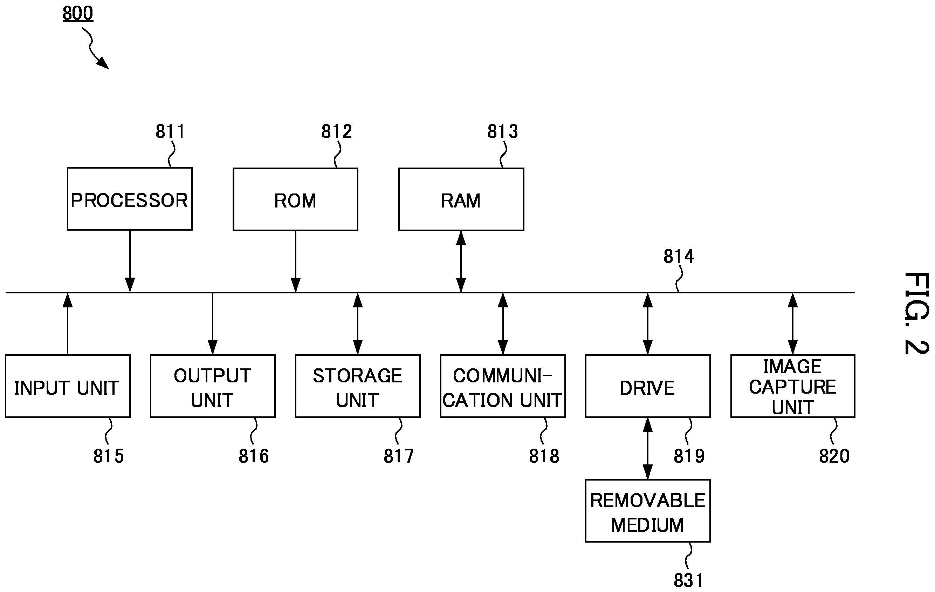

Figure 2 is a diagram illustrating the hardware configuration of an information processing apparatus 800 configuring each apparatus.

As illustrated in Figure 2, the information processing apparatus 800 configuring each apparatus includes a processor 811, a ROM (Read Only Memory) 812, a RAM (Random Access Memory) 813, a bus 814, an input unit 815, an output unit 816, a storage unit 817, a communication unit 818, a drive 819, and an image capture unit 820.

The processor 811 executes various processing according to programs that are recorded in the ROM 812, or programs that are loaded from the storage unit 820 to the RAM 813.

The RAM 813 also stores data and the like necessary for the processor 811 to execute the various processing, as appropriate.

The processor 811, the ROM 812 and the RAM 813 are connected to one another via the bus 814. The input unit 815, the output unit 816, the storage unit 817, the communication unit 818, the drive 819 and the image capture unit 820 are connected to the bus 814.

The input unit 815 is configured by various buttons and the like, and inputs a variety of information in accordance with instruction operations by the user.

The output unit 816 is configured by the display unit, a speaker, and the like, and outputs images and sound.

Note that in the case where the information processing apparatus 800 is configured as a smart phone or a tablet terminal, a configuration provided with a touch panel is also possible by overlapping the input unit 815 with a display of the output unit 816.

The storage unit 817 is configured by DRAM (Dynamic Random Access Memory) or the like, and stores various data managed by each server.

The communication unit 818 controls communication with other devices via the network 30.

A removable medium 831 composed of a magnetic disk, an optical disk, a magneto-optical disk, semiconductor memory or the like is installed in the drive 819, as appropriate. Programs that are read via the drive 819 from the removable medium 831 are installed in the storage unit 817, as necessary.

The image capture unit 820, which is configured by using an imaging apparatus including a lens and an image sensor, captures digital images of subjects.

Furthermore, in the case where the information processing apparatus 800 is configured as a numerical analysis server 20, a configuration that omits the image capture unit 820 is also possible. Also, in the case where the information processing apparatus 800 is configured as a tablet terminal, a configuration provided with a touch panel is also possible by configuring the input unit 815 as a touch sensor and overlapping the touch sensor with a display of the output unit 816.

### [Functional configuration]

Next, a functional configuration of each apparatus in the information processing system 1 will be described.

### [Configuration of user terminal 10]

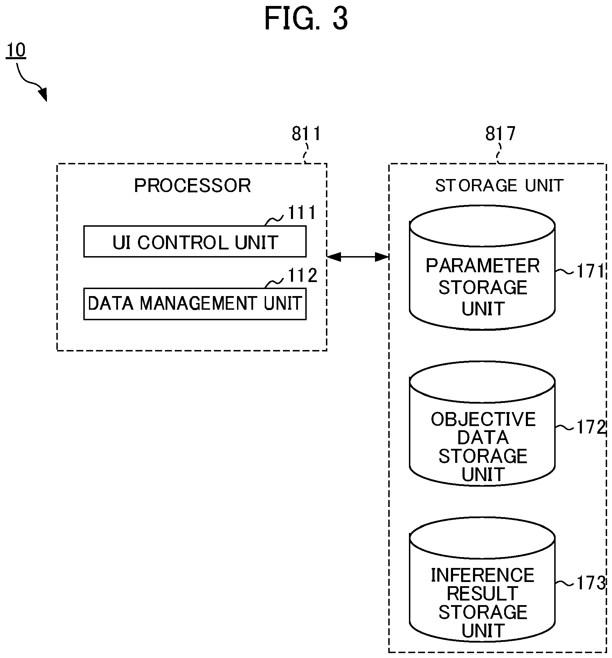

Figure 3 is a block diagram illustrating a functional configuration of the user terminal 10.

As illustrated in Figure 3, the processor 811 of the user terminal 10 functions as a UI control unit 111 and a data management unit 112. Also, a parameter storage unit 171, an objective data storage unit 172, and an inference result storage unit 173 are formed in the storage unit 817 of the user terminal 10.

In the parameter storage unit 171, various parameters (such as attribute values defining physical properties and the initial values of parameters, for example) set for performing numerical analysis of physical properties are stored.

In the objective data storage unit 172, data (data expressing shape, such as computer-aided design (CAD) data or standard triangulated language (STL) data) expressing an object on which to perform numerical analysis of physical properties is stored.

In the inference result storage unit 173, data expressing the result of numerical analysis (the result of inference using a machine learning model) of physical properties is stored.

The UI control unit 111 controls the display of various input and output screens (hereinafter referred to as "UI screens") for inputting and outputting various information for performing numerical analysis of physical properties. For example, the UI control unit 111 displays a UI screen (hereinafter referred to as the "training data upload screen") for uploading training data for constructing a machine learning model to be used in numerical analysis of physical properties, a UI screen (hereinafter referred to as the "output information setting screen") for setting the output information (such as the specific heat in temperature analysis, for example) of the machine learning model, a UI screen (hereinafter referred to as the "model selection screen") for selecting a machine learning model to be used in numerical analysis, a UI screen (hereinafter referred to as the "objective data input screen") for inputting the data to be analyzed by numerical analysis using a machine learning model, or a UI screen (hereinafter referred to as the "numerical analysis result display screen") for displaying the result of numerical analysis.

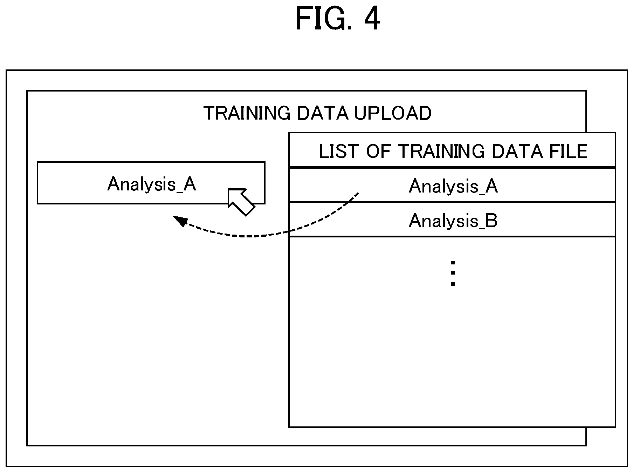

Figure 4 is a schematic diagram illustrating an example of the training data upload screen.

As illustrated in Figure 4, on the training data upload screen, training data to be used in the construction of a machine learning model can be selected and transmitted (uploaded) to the numerical analysis server 20. Note that data stored in the user terminal 10 or data stored in the numerical analysis server 20 or another server can be used as the training data to be used in the construction of a machine learning model. Moreover, data structured as one or a plurality of files can be used as the training data to be used in the construction of a machine learning model, and training data structured as a plurality of files can be uploaded as a folder.

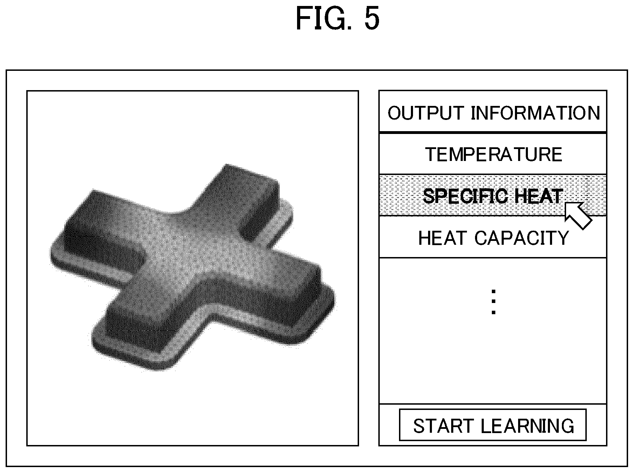

Figure 5 is a schematic diagram illustrating an example of the output information setting screen.

As illustrated in Figure 5, on the output information setting screen, a list of parameters selectable as output information in training data to be used in machine learning is displayed. Additionally, if the user selects a parameter to be set as the output information of a machine learning model (the physical property to be inferred by numerical analysis using a machine learning model) from among the listed parameters and operates a "Start Learning" button for initiating machine learning, a request for constructing a machine learning model that treats the selected parameter as output information is transmitted to the numerical analysis server 20. Thereafter, a machine learning model is constructed in the numerical analysis server 20, and the constructed machine learning model is available for use in numerical analysis.

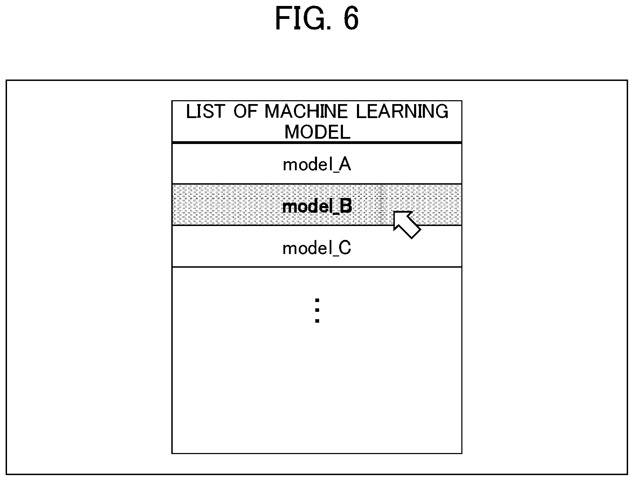

Figure 6 is a schematic diagram illustrating an example of the model selection screen.

As illustrated in Figure 6, on the model selection screen, a list of selectable machine learning models is displayed. In addition, the user selects a machine learning model to be used in numerical analysis from among the listed machine learning models. At this time, the user can select a machine learning model whose output information corresponds to the purpose of the numerical analysis.

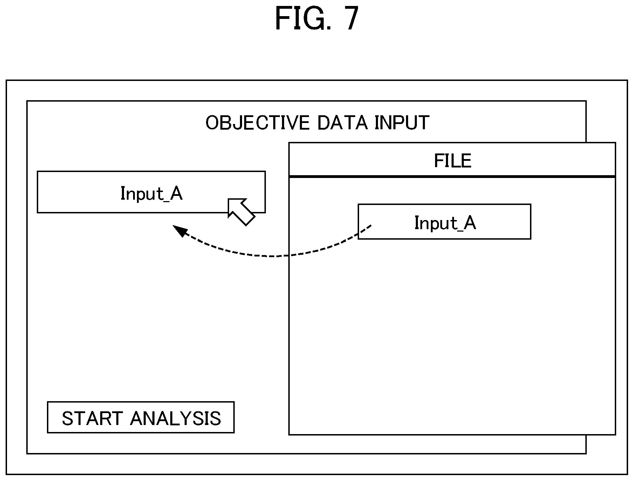

Figure 7 is a schematic diagram illustrating an example of the objective data input screen.

As illustrated in Figure 7, on the objective data input screen, the user can select data stored in the objective data storage unit 172 as the object of numerical analysis using a machine learning model.

On the objective data input screen, a "Start Analysis" button is displayed, and operating the "Start Analysis" button causes a request for numerical analysis related to physical properties to be transmitted to the numerical analysis server 20. With this arrangement, numerical analysis of the selected data using a machine learning model is executed in the numerical analysis server 20.

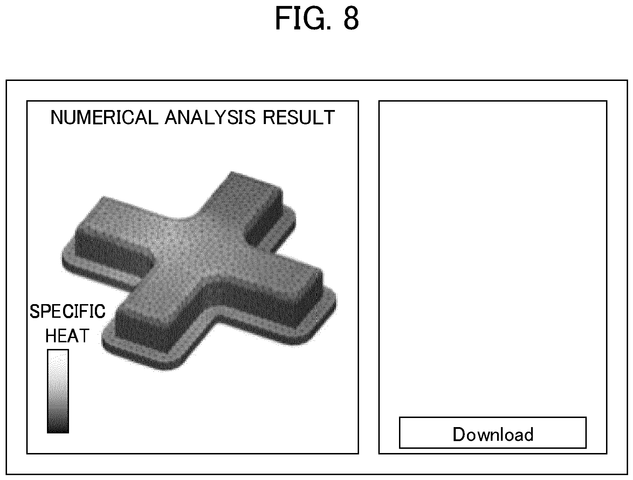

Figure 8 is a schematic diagram illustrating an example of the numerical analysis result display screen.

As illustrated in Figure 8, on the numerical analysis result display screen, the result of numerical analysis (the result of inference using the machine learning model) executed in the numerical analysis server 20 on the data selected by the user is displayed.

A "Download" button is displayed on the numerical analysis result display screen, and by operating the "Download" button, data expressing the numerical analysis result can be downloaded to the user terminal 10. The downloaded data of the numerical analysis result (inference result) is stored in the inference result storage unit 173.

Returning to Figure 3, the data management unit 112 stores and reads data with respect to the parameter storage unit 171, the objective data storage unit 172, and the inference result storage unit 173, and manages the transmission and reception of data to and from the numerical analysis server 20. For example, the data management unit 112 reads data selected as the object of numerical analysis using a machine learning model on the objective data input screen from the objective data storage unit 172, and transmits the read data to the numerical analysis server 20. Also, the data management unit 112 receives data of numerical analysis result (the result of inference using a machine learning model) from the numerical analysis server 20, and stores the received data of numerical analysis result in the inference result storage unit 173.

### [Configuration of numerical analysis server 20]

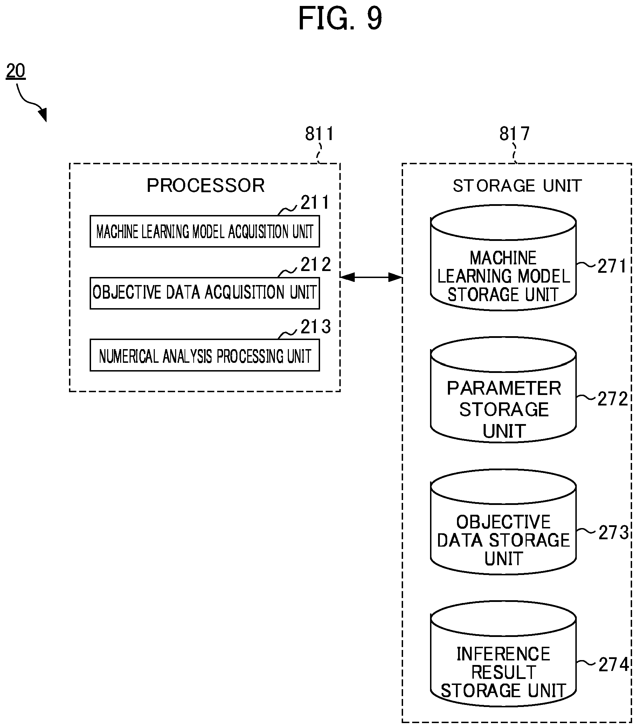

Figure 9 is a block diagram illustrating a functional configuration of the numerical analysis server 20.

As illustrated in Figure 9, the processor 811 of the numerical analysis server 20 functions as a machine learning model acquisition unit 211, an objective data acquisition unit 212, and a numerical analysis processing unit 213. Also, a machine learning model storage unit 271, a parameter storage unit 272, an objective data storage unit 273, and an inference result storage unit 274 are formed in the storage unit 817 of the numerical analysis server 20.

In the machine learning model storage unit 271, machine learning models acquired by the machine learning model acquisition unit 211 are stored. The machine learning models stored in the machine learning model storage unit 271 are machine learning models acquired by repeatedly training with training data that treats given physical properties related to an object of numerical analysis as the input and intended physical properties as the output.

In the parameter storage unit 272, various parameters (such as attribute values defining physical properties and the initial values of parameters, for example) transmitted from the user terminal 10 are stored.

In the objective data storage unit 273, data (data expressing shape, such as computer-aided design (CAD) data or standard triangulated language (STL) data) transmitted from the user terminal 10 and expressing an object on which to perform numerical analysis of physical properties is stored.

In the inference result storage unit 274, data expressing the result of numerical analysis (the result of inference using a machine learning model) of physical properties is stored.

The machine learning model acquisition unit 211 constructs a machine learning model to be used in numerical analysis of physical properties. The machine learning model constructed at this time is constructed according to the type of numerical analysis of physical properties, and in the present embodiment is acquired by repeatedly training with training data that treats given physical properties related to an object of numerical analysis as the input and intended physical properties as the output.

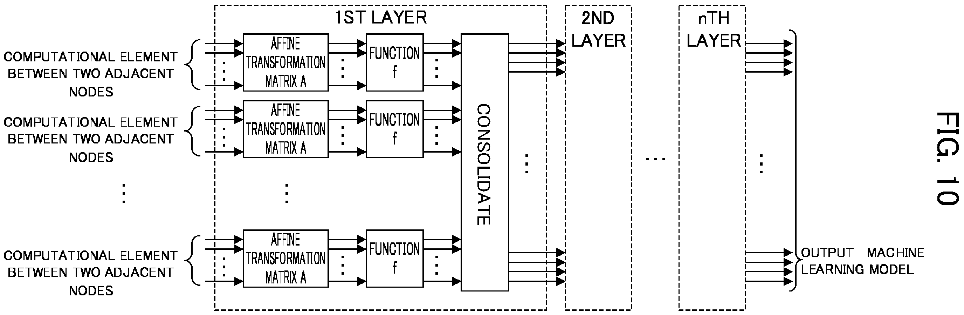

Figure 10 is a schematic diagram illustrating a method by which the machine learning model acquisition unit 211 constructs a machine learning model.

In the present embodiment, for a node of interest and a single adjacent node in graph data corresponding to a mesh shape expressing the structure of an object, parameters expressing various information for performing numerical analysis of physical properties and the positions of the nodes in the graph data corresponding to the mesh shape expressing the structure of the object are treated as the input of an affine transformation matrix A expressing fitting parameters. In other words, a computational element for machine learning between two nodes is the input of the affine transformation matrix A. Thereafter, the transformation result is inputted into a function f that performs a linear or nonlinear transformation. Similarly, for the node of interest and another single adjacent node, parameters expressing various information for performing numerical analysis of physical properties and the positions of the nodes in the graph data corresponding to the mesh shape expressing the structure of the object are inputted into an affine transformation matrix A of the same size, and the transformation result is inputted into the function f. In this way, computations for machine learning are performed between the node of interest and all adjacent nodes, and computational results for machine learning related to the single node of interest are acquired.

Furthermore, computations for machine learning are performed similarly for all nodes in the graph data corresponding to the mesh shape expressing the structure of the object, and for each node, computational results with respect to all adjacent nodes are acquired.

Thereafter, the computational results for machine learning related to each node are consolidated to complete the first layer of machine learning, and by repeating such processing through a plurality of n layers (where n is an integer equal to or greater than 2) as necessary, the affine transformation matrix A (fitting parameters) are successively optimized, and the intended machine learning model is constructed. Note that in the machine learning model according to the present embodiment, the affine transformation matrix A in each layer of machine learning is allowed to be a different matrix in each layer.

In the graph data corresponding to the mesh shape expressing the structure of the object, even if the number of nodes changes, the number of computational elements for machine learning between two adjacent nodes does not change, and therefore by adopting such a method, an affine transformation matrix A of the same size can be used repeatedly to perform machine learning.

The objective data acquisition unit 212 acquires data treated as the object of numerical analysis that was selected in the user terminal 10. The objective data acquisition unit 212 also stores the acquired data treated as the object of numerical analysis in the objective data storage unit 273. Note that in the present embodiment, if the data treated as the object of numerical analysis that was selected in the user terminal 10 does not express the structure of an object as a mesh shape, the objective data acquisition unit 212 converts the data into data expressing the structure of the object as a mesh shape according to a mesh generation method using Delaunay triangulation or the like, and stores the converted data. However, if the data treated as the object of numerical analysis that was selected in the user terminal 10 does not express the structure of an object as a mesh shape, it is also possible to store the data in the objective data storage unit 273 and convert the stored data into data expressing the structure of the object as a mesh shape at the timing when numerical analysis is executed. Also, as described above, the mesh shape data acquired at this time includes graph data composed of nodes and edges expressing a mesh shape as well as graph data in which data about physical properties (such as material properties or temperature data, for example) is assigned to at least one of the nodes or edges.

The numerical analysis processing unit 213 applies a machine learning model to the data treated as the object of numerical analysis acquired by the objective data acquisition unit 212, and calculates data expressing the numerical analysis result (data about the result of inference using a machine learning model). In the present embodiment, the numerical analysis processing unit 213 includes machine learning models that treat parameters expressing various information for performing numerical analysis of physical properties and the positions of nodes in graph data corresponding to a mesh shape expressing the structure of an object as the input and the result of the intended numerical analysis performed on the input as the output. Additionally, the numerical analysis processing unit 213 inputs the various parameters (parameters expressing various information for performing numerical analysis of physical properties) and the graph data corresponding to a mesh shape expressing the structure of an object acquired from the user terminal 10 and stored in the parameter storage unit 272 into a machine learning model selected by the user terminal 10, and outputs the numerical analysis result inferred by artificial intelligence.

In the present embodiment, in the case where the numerical analysis processing unit 213 uses a machine learning model to infer a numerical analysis result by artificial intelligence, the relationship between each node of interest and a single adjacent node is transformed by the machine learning model and the transformation results for all nodes adjacent to the node of interest are consolidated (for example, added together) to obtain an inference result for the node of interest. Furthermore, the transformation results for all nodes forming the graph data corresponding to the mesh shape expressing the structure of the object are consolidated and treated as an inference result for the entire object.

In the case where the numerical analysis processing unit 213 executes numerical analysis of physical properties, parameters expressing various information for performing numerical analysis of physical properties and the positions of nodes in graph data corresponding to a mesh shape expressing the structure of an object are treated as the input of a machine learning model, and numerical analysis of physical properties (the inferring of a numerical analysis result) using artificial intelligence is performed according to a method similar to the case where the machine learning model acquisition unit 211 constructs a machine learning model. In other words, for a node of interest and a single adjacent node in graph data corresponding to a mesh shape expressing the structure of an object, the numerical analysis processing unit 213 treats parameters expressing various information for performing numerical analysis of physical properties and the positions of nodes when the structure of the object is expressed as a mesh shape as the input of an affine transformation matrix A expressing fitting parameters. Thereafter, the numerical analysis processing unit 213 inputs the transformation result into the function f that performs a linear or nonlinear transformation. Similarly, for the node of interest and another single adjacent node, the numerical analysis processing unit 213 inputs parameters expressing various information for performing numerical analysis of physical properties and the positions of nodes when the structure of the object is expressed as a mesh shape into an affine transformation matrix A of the same size, and inputs the transformation result into the function f. The numerical analysis processing unit 213 performs similar numerical analysis for all nodes adjacent to the node of interest, and acquires the result of numerical analysis of physical properties related to the single node of interest.

In addition, the numerical analysis processing unit 213 performs numerical analysis similarly for all nodes in the graph data corresponding to the mesh shape expressing the structure of the object, and for each node, numerical analysis results reflecting the numerical analysis results with respect to all adjacent nodes are acquired.

Thereafter, the numerical analysis processing unit 213 consolidates the numerical analysis results from each node to acquire the result of numerical analysis of physical properties.

Note that the numerical analysis processing unit 213 stores data expressing the result of numerical analysis of physical properties (the result of inference using a machine learning model) in the inference result storage unit 274. Also, if downloading is requested by the user terminal 10, the numerical analysis processing unit 213 transmits data expressing the result of numerical analysis of physical properties (the result of inference using a machine learning model) to the user terminal 10.

Here, in the information processing system 1 according to the present embodiment, graph data corresponding to a mesh shape expressing the structure of an object is treated as the input data in the case where numerical analysis of physical properties is performed, but it is possible to treat either mesh shape data (graph data) or vector data as the data of the numerical analysis result.

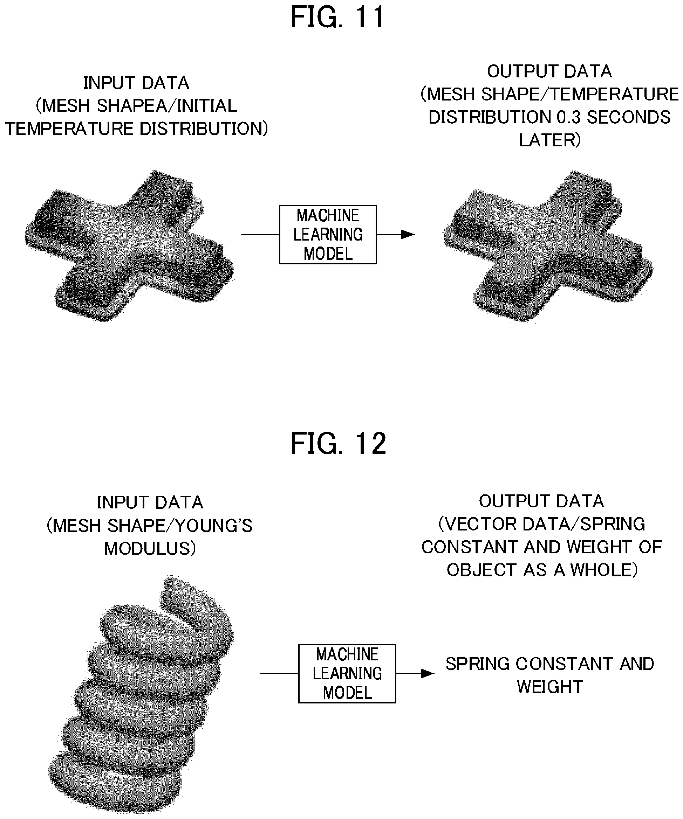

Figure 11 is a schematic diagram illustrating an example of the case where graph data corresponding to a mesh shape expressing the structure of an object is treated as the input data, and the output data is also mesh shape data (graph data). Note that Figure 11 illustrates an example in which mesh shape data (graph data corresponding to a mesh shape) expressing an initial temperature distribution is treated as the input data, and mesh shape data (graph data corresponding to a mesh shape) expressing the temperature distribution 0.3 seconds later is treated as the output data.

As illustrated in Figure 11, in the case where the change over time, transfer state, or the like of a physical quantity (such as temperature or force) in the structure of an object is simulated, the output data is outputted as mesh shape data (graph data corresponding to a mesh shape).

Also, Figure 12 is a schematic diagram illustrating an example of the case where mesh shape data (graph data corresponding to a mesh shape) expressing the structure of an object is treated as the input data, and the output data is vector data. Note that Figure 12 illustrates an example in which mesh shape data (graph data corresponding to a mesh shape) expressing the Young's modulus of an object is treated as the input data, and vector data expressing the spring constant and weight of the object as a whole is treated as the output data.

As illustrated in Figure 12, in the case where a physical quantity (such as the spring constant or weight) related to the overall structure of an object is analyzed as an inverse simulation problem, numerical analysis results obtained as mesh shape data (graph data corresponding to a mesh shape) are consolidated (such as by taking a weighted average) through the use of a neural network or the like, and thereby outputted as vector data.

### [Operations]

Next, the operations of the information processing system 1 will be described.

### [UI control process]

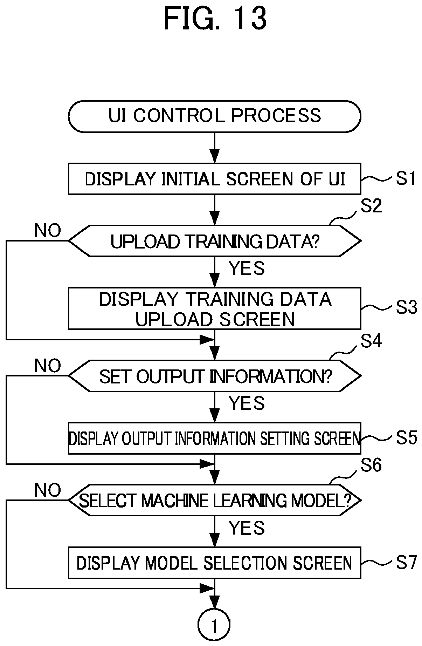

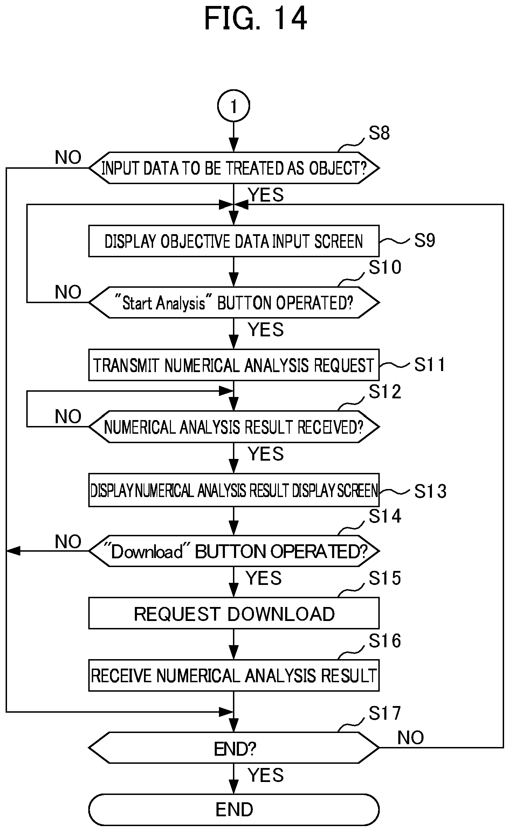

Figures 13 and 14 are flowcharts illustrating the flow of a UI control process executed by the user terminal 10.

The UI control process is started in response to the input of an instruction for executing the UI control process via the input unit 815 of the user terminal 10.

When the UI control process is started, in step S1, the UI control unit 111 displays an initial screen of a user interface for performing numerical analysis of physical properties. On the initial screen of the user interface, a menu for inputting and outputting various information for performing numerical analysis of physical properties is displayed.

In step S2, the UI control unit 111 determines whether the user has selected a menu item for uploading training data for constructing a machine learning model to be used in numerical analysis of physical properties.

If the user has not selected the menu item for uploading training data for constructing a machine learning model to be used in numerical analysis of physical properties, NO is determined in step S2, and the process proceeds to step S4.

On the other hand, if the user has selected the menu item for uploading training data for constructing a machine learning model to be used in numerical analysis of physical properties, YES is determined in step S2, and the process proceeds to step S3.

In step S3, the UI control unit 111 displays the training data upload screen. On the training data upload screen, the selection of training data to be used in the construction of a machine learning model and an instruction for transmitting the selected training data to the numerical analysis server 20 are received.

In step S4, the UI control unit 111 determines whether the user has selected a menu item for setting the output information (such as the specific heat in temperature analysis, for example) of the machine learning model.

If the user has not selected the menu item for setting the output information of the machine learning model, NO is determined in step S4, and the process proceeds to step S6.

On the other hand, if the user has selected the menu item for setting the output information of the machine learning model, YES is determined in step S4, and the process proceeds to step S5.

In step S5, the UI control unit 111 displays the output information setting screen. On the output information setting screen, a list of parameters selectable as output information in training data to be used in machine learning is displayed, and the selection of a parameter to be set as the output information of the machine learning model is received. Also, on the output information setting screen, if a "Start Learning" button for initiating machine learning is operated, a request for constructing a machine learning model that treats the selected parameter as the output information is transmitted to the numerical analysis server 20.

In step S6, the UI control unit 111 determines whether the user has selected a menu item for selecting a machine learning model to be used in numerical analysis.

If the menu item for selecting a machine learning model to be used in numerical analysis is not selected, NO is determined in step S6, and the process proceeds to step S8.

On the other hand, if the menu item for selecting a machine learning model to be used in numerical analysis is selected, YES is determined in step S6, and the process proceeds to step S7.

In step S7, the UI control unit 111 displays the model selection screen. On the model selection screen, a list of selectable machine learning models is displayed, and the selection of a machine learning model to be used in numerical analysis from among the listed machine learning models is received.

In step S8, the UI control unit 111 determines whether a menu item for inputting data to be treated as the object of numerical analysis using a machine learning model is selected.

If the menu item for inputting data to be treated as the object of numerical analysis using a machine learning model is not selected, NO is determined in step S8, and the process proceeds to step S17.

On the other hand, if the menu item for inputting data to be treated as the object of numerical analysis using a machine learning model is selected, YES is determined in step S8, and the process proceeds to step S9.

In step S9, the UI control unit 111 displays the objective data input screen. On the objective data input screen, the selection of data stored in the objective data storage unit 172 as the object of numerical analysis using a machine learning model is received.

In step S10, the UI control unit 111 determines whether a "Start Analysis" button is operated. In other words, it is determined whether a request for numerical analysis related to physical properties is given.

If the "Start Analysis" button is not operated, NO is determined in step S10, and the process proceeds to step S9.

On the other hand, if the "Start Analysis" button is operated, YES is determined in step S10, and the process proceeds to step S11.

In step S11, the data management unit 112 transmits a request for numerical analysis related to physical properties to the numerical analysis server 20.

In step S12, the data management unit 112 determines whether the result of numerical analysis of physical properties (the result of inference using a machine learning model) is received from the numerical analysis server 20.

If the result of numerical analysis of physical properties (the result of inference using a machine learning model) is not received from the numerical analysis server 20, NO is determined in step S12, and the process in step S12 is repeated.

On the other hand, if the result of numerical analysis of physical properties (the result of inference using a machine learning model) is received from the numerical analysis server 20, YES is determined in step S12, and the process proceeds to step S13.

In step S13, the UI control unit 111 displays the numerical analysis result display screen. On the numerical analysis result display screen, the result of numerical analysis (the result of inference using the machine learning model) executed in the numerical analysis server 20 on the data selected by the user is displayed, and a "Download" button for downloading data expressing the numerical analysis result to the user terminal 10 is displayed.

In step S14, the UI control unit 111 determines whether the "Download" button is operated.

If the "Download" button is not operated, NO is determined in step S14, and the process proceeds to step S17.

On the other hand, if the "Download" button is operated, YES is determined in step S14, and the process proceeds to step S15.

In step S15, the data management unit 112 requests the numerical analysis server 20 to transmit (download) data expressing the numerical analysis result.

In step S16, the data management unit 112 receives data expressing the numerical analysis result from the numerical analysis server 20.

In step S17, the UI control unit 111 determines whether an instruction for ending the UI control process is given.

If the instruction for ending the UI control process is not given, NO is determined in step S17, and the process proceeds to step S9.

On the other hand, if the instruction for ending the UI control process is given, YES is determined in step S17, and the UI control process ends.

Next, the processes executed by the numerical analysis server 20 will be described.

### [Machine learning model construction process]

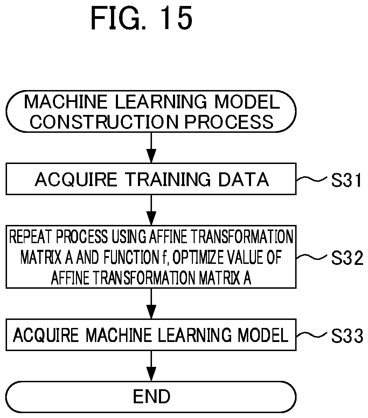

Figure 15 is a flowchart illustrating the flow of a machine learning model construction process executed by the numerical analysis server 20.

The machine learning model construction process is started when an instruction for executing the machine learning model construction process is inputted from the input unit 815 of the numerical analysis server 20 or another apparatus.

When the machine learning model construction process is started, in step S31, the machine learning model acquisition unit 211 acquires training data to be used in machine learning. Note that the training data to be used in machine learning may be acquired by being uploaded from the user terminal 10 or by being downloaded from another server storing various types of training data.

In step S32, the machine learning model acquisition unit 211 repeats a process of inputting parameters expressing various information for performing numerical analysis of physical properties and the positions of the nodes in graph data corresponding to a mesh shape expressing the structure of an object into an affine transformation matrix A of the same size and inputting the transformation result into a function f to optimize the value of the affine transformation matrix A. Through this process, machine learning is executed.

In step S33, the machine learning model acquisition unit 211 acquires the machine learning model that is the result of performing machine learning until a set condition is fulfilled. Through this process, the machine learning model to be used in numerical analysis of physical properties is constructed.

After step S33, the machine learning model construction process ends.

### [Numerical analysis process]

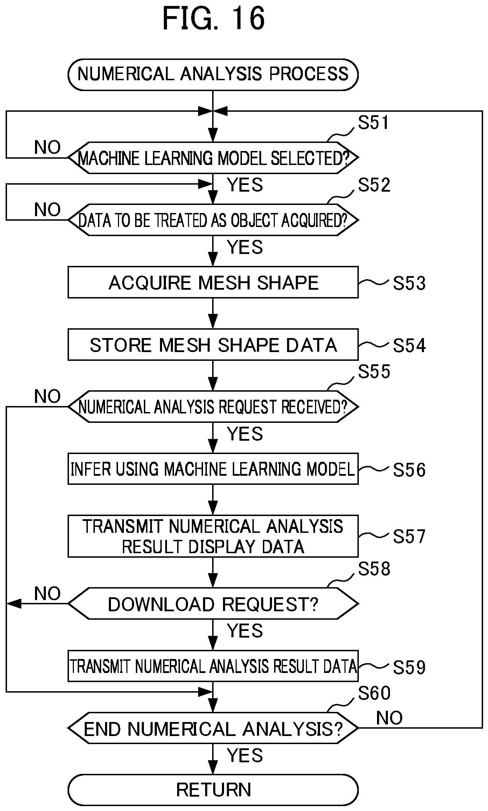

Figure 16 is a flowchart illustrating the flow of a numerical analysis process executed by the numerical analysis server 20.

The numerical analysis process is started together with the bootup of the numerical analysis server 20 and executed repeatedly.

When the numerical analysis process is started, in step S51, the numerical analysis processing unit 213 determines whether the user terminal 10 has selected a machine learning model to be used in numerical analysis.

If the user terminal 10 has not selected a machine learning model to be used in numerical analysis, NO is determined in step S51, and the process in step S51 is repeated.

On the other hand, if the user terminal 10 has selected a machine learning model to be used in numerical analysis, YES is determined in step S51, and the process proceeds to step S52.

In step S52, the objective data acquisition unit 212 determines whether data to be treated as the object of numerical analysis has been acquired from the user terminal 10.

If data to be treated as the object of numerical analysis has not been acquired from the user terminal 10, NO is determined in step S52, and the process in step S52 is repeated.

On the other hand, if data to be treated as the object of numerical analysis has been acquired from the user terminal 10, YES is determined in step S52, and the process proceeds to step S53.

In step S53, the objective data acquisition unit 212 acquires a mesh shape of the data to be treated as the object of numerical analysis acquired from the user terminal 10. Note that the process in step S53 can be skipped if the data to be treated as the object of numerical analysis acquired from the user terminal 10 is mesh shape data. Also, if the data to be treated as the object of numerical analysis acquired from the user terminal 10 does not express the structure of an object as a mesh shape, the data may be stored in the objective data storage unit 273 and the process in step S53 may be executed at the timing when numerical analysis is executed. Note that the mesh shape data acquired at this time includes graph data composed of nodes and edges expressing a mesh shape as well as graph data in which data about physical properties (such as material properties or temperature data, for example) is assigned to at least one of the nodes or edges.

In step S54, the objective data acquisition unit 212 stores the mesh shape data to be treated as the object of numerical analysis in the objective data storage unit 273.

In step S55, the numerical analysis processing unit 213 determines whether a request for numerical analysis related to physical properties has been received from the user terminal 10.

If a request for numerical analysis related to physical properties has not been received from the user terminal 10, NO is determined in step S55, and the process proceeds to step S60.

On the other hand, if a request for numerical analysis related to physical properties has been received from the user terminal 10, YES is determined in step S55, and the process proceeds to step S56.

In step S56, the numerical analysis processing unit 213 uses the machine learning model to calculate data expressing a numerical analysis result (data of the result of inference using the machine learning model). Note that the data of the inferred numerical analysis result is stored in the inference result storage unit 274.

In step S57, the numerical analysis processing unit 213 transmits data for displaying the result of numerical analysis of physical properties (the result of inference using the machine learning model) to the user terminal 10.

In step S58, the numerical analysis processing unit 213 determines whether the user terminal 10 has requested to download data expressing the result of numerical analysis of physical properties (the result of inference using the machine learning model).

If the user terminal 10 has not requested to download data expressing the result of numerical analysis of physical properties, NO is determined in step S58, and the process proceeds to step S60.

On the other hand, if the user terminal 10 has requested to download data expressing the result of numerical analysis of physical properties, YES is determined in step S58, and the process proceeds to step S59.

In step S59, the numerical analysis processing unit 213 transmits data expressing the result of numerical analysis of physical properties (the result of inference using the machine learning model) to the user terminal 10.

In step S60, the numerical analysis processing unit 213 determines whether the numerical analysis requested by the user terminal 10 has ended. The determination of whether the numerical analysis requested by the user terminal 10 has ended can be made on the basis of a notification or the like indicating the end of numerical analysis of physical properties transmitted from the user terminal 10, for example.

If the numerical analysis requested by the user terminal 10 has not ended, NO is determined in step S59, and the process proceeds to step S51.

On the other hand, if the numerical analysis requested by the user terminal 10 has ended, YES is determined in step S59, and the numerical analysis process is repeated.

As above, the information processing system 1 according to the present embodiment uses an affine transformation matrix of a size that can be defined statically according to relationships between two nodes to construct a machine learning model on the basis of graph data corresponding to a mesh shape expressing the structure of an object for machine learning. Furthermore, the constructed machine learning model is used to calculate data expressing a numerical analysis result (data of the result of inference using the machine learning model) on the basis of graph data corresponding to a mesh shape expressing the structure of the object of numerical analysis.

Consequently, according to the information processing system 1 according to the present embodiment, it is possible to use machine learning to perform numerical analysis appropriately.

### [Second embodiment]

Next, a second embodiment of the present invention will be described.

The information processing system 1 according to the present embodiment is the application of the numerical analysis technique of the first embodiment to the design of a construction (structure optimization). In other words, in the present embodiment, a plurality of structures are prepared as candidates by varying the shape and physical properties (hereinafter referred to as "structural elements" where appropriate) of each portion in the data of a construction that is treated as a prototype, and the physical properties (such as the load-bearing capacity) of each candidate structure is calculated using the numerical analysis technique of the first embodiment. Thereafter, a machine learning model is applied by treating the data of the construction treated as a prototype and parameters (such as the demanded specifications (such as weight and the load-bearing capacity) and the weights of an evaluation function) expressing the conditions of a design simulation as the input to thereby output a structure inferred to fulfill the conditions of the design simulation from among the candidate structures. The machine learning model used at this time is acquired by performing machine learning in which the data of the construction treated as a prototype and the parameters expressing various conditions of the design simulation are treated as the input and structures that fulfill various conditions from among the candidate structures are treated as training data.

With this arrangement, a structure that is optimized with respect to the conditions of the design simulation can be inferred in a short amount of time, and even if the conditions of the design simulation are modified, a structure corresponding to the modified conditions can be inferred rapidly.

Consequently, according to the information processing system according to the present embodiment, a design simulation of a construction can be run flexibly and quickly.

Note that in the present embodiment, the machine learning model to be used when calculating the physical properties of each candidate structure is not limited to a model obtained by performing machine learning on the basis of graph data composed of nodes and edges expressing a mesh shape, and may also be a model obtained by performing machine learning as a 1D model (a model used in a 1D simulation) in which the input and the output are treated as scalars.

Also, in the present embodiment, the application of a machine learning model to output a structure inferred to fulfill the conditions of a design simulation is also simply referred to as "design simulation".

### [Configuration]

The overall system configuration of the information processing system according to the present embodiment is similar to the system configuration illustrated in Figure 1 in relation to the first embodiment.

In the present embodiment, the user terminal 10 is an information processing apparatus used by a user who runs a design simulation of a construction, receives the input of parameters (such as demanded specifications and weights to be set in an evaluation function) expressing the conditions of the design simulation of the construction, and sends requests related to the design simulation of the construction to the numerical analysis server 20. In addition, the user terminal 10 displays the result (inferred structure example) of the design simulation of the construction transmitted from the numerical analysis server 20 and downloads data about the result of the design simulation of the construction.

If a request related to a design simulation of a construction is received from the user terminal 10, the numerical analysis server 20 calculates a performance value (output of evaluation function) for optimizing an evaluation function expressing the quality of a construction obtained by the design simulation with respect to the demanded specifications. Additionally, the numerical analysis server 20 includes a value of each attribute (physical property) of the construction corresponding to the calculated performance value in the input, runs a design simulation using a machine learning model that treats a structure fulfilling the conditions of the design simulation as the output, and infers the structure of a construction fulfilling the conditions of the design simulation. Also, the numerical analysis server 20 constructs a machine learning model by performing machine learning in which the data of the construction treated as a prototype and the parameters expressing various conditions of the design simulation are treated as the input and structures that fulfill various conditions from among the candidate structures are treated as training data, and stores the constructed machine learning model as a machine learning model to be used in a design simulation.

### [Functional configuration]

Next, a functional configuration of each apparatus in the information processing system 1 will be described.

### [Configuration of user terminal 10]

The functional configuration of the user terminal 10 according to the present embodiment is similar to the functional configuration illustrated in Figure 3 in relation to the first embodiment.

In the present embodiment, various parameters set for running a design simulation of a construction (such as parameters expressing the portions of the construction to be optimized and the range of variation, and parameters expressing the weights of attributes for evaluating the construction, for example) are stored in the parameter storage unit 171.

In the objective data storage unit 172, singular or plural data (data expressing shape, such as CAD data or STL data) expressing a prototype of a construction on which to run a design simulation is stored.

In the inference result storage unit 173, data expressing the result of a design simulation of a construction (the result of inference using a machine learning model) is stored.

The UI control unit 111 controls the display of various input and output screens (UI screens) for inputting and outputting various information for running a design simulation of a construction. For example, the UI control unit 111 displays a UI screen (training data upload screen) for uploading training data for constructing a machine learning model to be used in a design simulation of a construction, a UI screen (output information setting screen) for setting the output information (such as an "optimized structure of a construction", for example) of the machine learning model, a UI screen (model selection screen) for selecting a machine learning model to be used in a design simulation of a construction, a UI screen (objective data input screen) for inputting the data (data expressing a prototype of a construction on which to run a design simulation) to be treated as the object of a design simulation of a construction using a machine learning model, a UI screen (hereinafter referred to as the "optimization parameter setting screen") for setting the portions of the construction to be optimized and the range of variation, a UI screen (hereinafter referred to as the "weight setting screen") for setting the weights of attributes (such as weight or rigidity) for evaluating a construction, or a UI screen (inference result display screen) for displaying an inference result of an optimized construction.

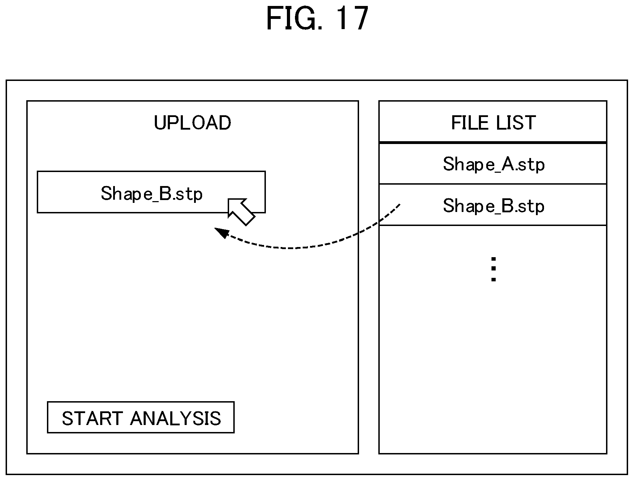

Figure 17 is a schematic diagram illustrating an example of the objective data input screen.

As illustrated in Figure 17, on the objective data input screen, the user can select data (such as CAD data or STL data) expressing the shape of a construction stored in the objective data storage unit 172 as the object of a design simulation of a construction using a machine learning model (prototype data of a construction on which to run a design simulation).

On the objective data input screen, a "Start Analysis" button is displayed, and operating the "Start Analysis" button causes a request for a design simulation of a construction to be transmitted to the numerical analysis server 20. With this arrangement, a design simulation of a construction using a machine learning model on the selected data is executed in the numerical analysis server 20.

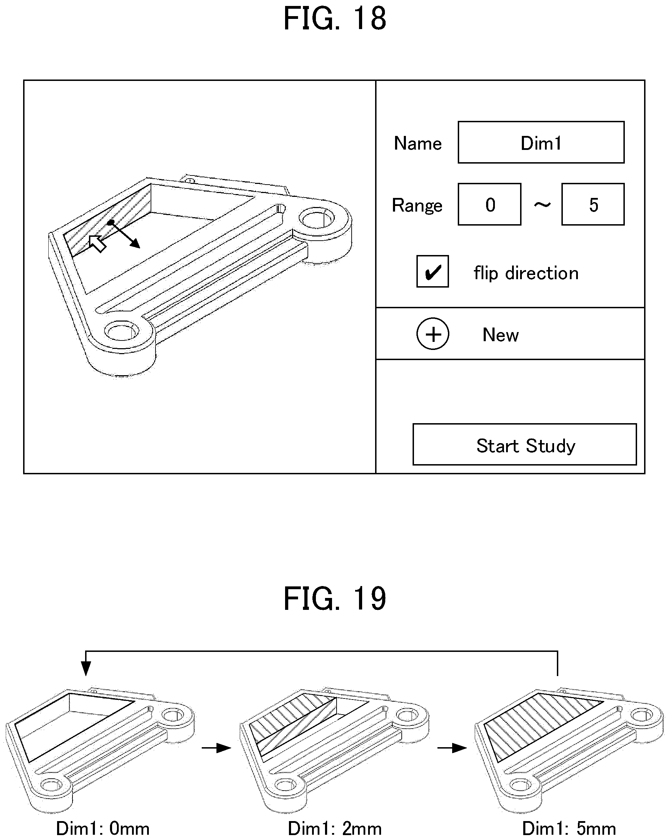

Figure 18 is a schematic diagram illustrating an example of the optimization parameter setting screen.

As illustrated in Figure 18, on the optimization parameter setting screen, the data of a prototype of a construction on which to run a design simulation is displayed as an image, and numerical value input fields for setting the portions of the construction to be optimized and the range of variation are displayed. On the optimization parameter setting screen, by selecting a point, line, or face of the construction in the image as an object of optimization and inputting the range (such as length or ratio) of variation and the direction of variation to be implemented during optimization, the conditions of the optimization with respect to the prototype of the construction on which to run a design simulation can be set.

Also, on the optimization parameter setting screen, the image of the data of the prototype of the construction is displayed so as to change according to the input content regarding the range (such as length or ratio) of variation and the direction of variation to be implemented during optimization.

Figure 19 is a schematic diagram illustrating a state in which the image of the data of the prototype of the construction is displayed so as to change according to the input content regarding the range of variation and the direction of variation to be implemented during optimization.

In the example illustrated in Figure 19, in the data of the prototype of the construction, the display of the image is switched as the amount of change (here, a movement distance) of the portion named "Dim1" is varied in order from "0 mm", to "2 mm", to "5 mm".

Through such a display mode, changes to the shape due to optimization can be presented to the user in a way that is easily understood.

Also, on the optimization parameter setting screen, a "Start Study" button is displayed, and operating the button causes the numerical analysis server 20 to calculate a performance value for optimizing an evaluation function expressing the quality of a construction obtained from a design simulation.

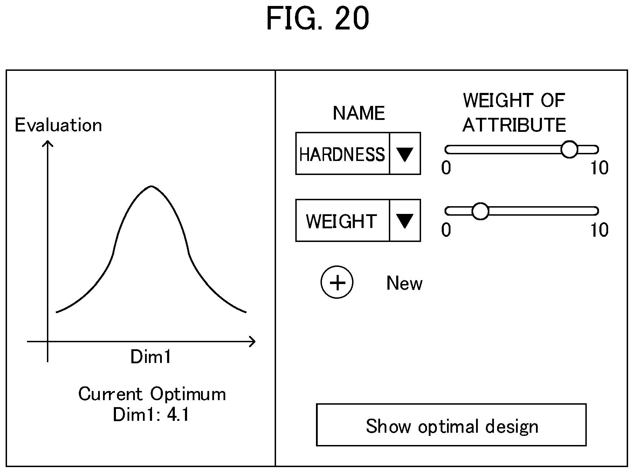

Figure 20 is a schematic diagram illustrating an example of the weight setting screen.

As illustrated in Figure 20, on the weight setting screen (right field), the names ("Hardness" and "Weight") of attributes for which weights are to be set when evaluating a construction and slider bars for setting the weights of the attributes are displayed.

Also, on the weight setting screen (left field), the value (Evaluation) of the evaluation function in the case of varying the amount of change of a portion of a construction to be optimized is displayed in the form of a graph. If the attribute slider bars displayed on the right side of the weight setting screen are moved, the weights of the attributes are changed, and in response, the performance value for optimizing the evaluation function is updated in the numerical analysis server 20 to a performance value reflecting the weights set on the weight setting screen, and the graph of the evaluation function displayed on the left side of the weight setting screen changes.

If the user operates a "Show Optimal Design" button after deciding the weight of each attribute, in the numerical analysis server 20, the value of each attribute (physical property) of the construction corresponding to the performance value for optimizing the evaluation function is included in the input, a design simulation using a machine learning model that treats a structure fulfilling the conditions of the design simulation as the output is run, and the structure of a construction achieving the calculated performance is inferred.

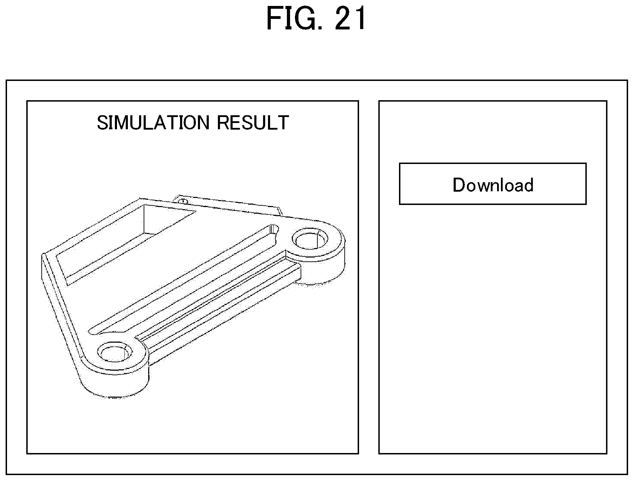

Figure 21 is a schematic diagram illustrating an example of the inference result display screen.

As illustrated in Figure 21, on the inference result display screen, the structure of a construction inferred by the numerical analysis server 20 (an inference result of an optimized construction) reflecting the weights set on the weight setting screen is displayed as a design simulation result.

A "Download" button is displayed on the inference result display screen, and by operating the "Download" button, data (such as CAD data or STL data) of a shape expressing the construction of the inference result can be downloaded to the user terminal 10.

The data management unit 112 stores and reads data with respect to the parameter storage unit 171, the objective data storage unit 172, and the inference result storage unit 173, and manages the transmission and reception of data to and from the numerical analysis server 20. For example, the data management unit 112 reads data expressing a prototype of a construction selected on the objective data input screen from the objective data storage unit 172, and transmits the read prototype data to the numerical analysis server 20. Also, the data management unit 112 receives shape data expressing a construction of an inference result from the numerical analysis server 20, and stores the received shape data in the inference result storage unit 173.

### [Configuration of numerical analysis server 20]

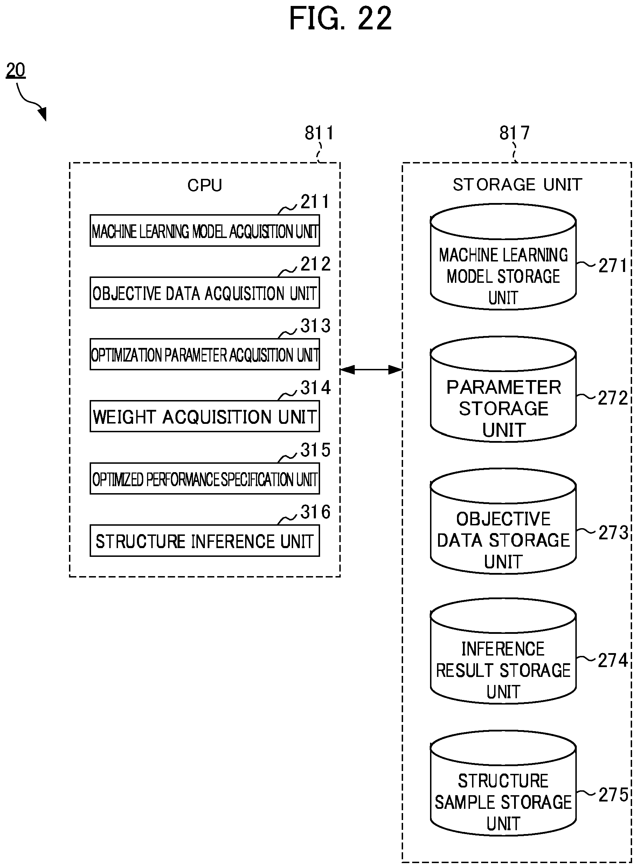

Figure 22 is a block diagram illustrating a functional configuration of the numerical analysis server 20.

As illustrated in Figure 22, the processor 811 of the numerical analysis server 20 functions as a machine learning model acquisition unit 211, an objective data acquisition unit 212, an optimization parameter acquisition unit 313, a weight acquisition unit 314, an optimized performance specification unit 315, and a structure inference unit 316. Also, a machine learning model storage unit 271, a parameter storage unit 272, an objective data storage unit 273, an inference result storage unit 274, and a structure sample storage unit 275 are formed in the storage unit 817 of the numerical analysis server 20.

In the machine learning model storage unit 271 of the present embodiment, machine learning models acquired by the machine learning model acquisition unit 211 are stored. The machine learning models stored in the machine learning model storage unit 271 are machine learning models acquired by performing machine learning in which the data of the construction treated as a prototype and the parameters expressing various conditions of the design simulation are treated as the input and structures that fulfill various conditions from among the candidate structures are treated as training data.

In the parameter storage unit 272, various parameters (such as parameters expressing the portions of the construction to be optimized and the range of variation, and parameters expressing the weights of attributes for evaluating the construction, for example) transmitted from the user terminal 10 are stored.

In the objective data storage unit 273, data (data expressing shape, such as CAD data or STL data) transmitted from the user terminal 10 and expressing a prototype of a construction on which to run a design simulation is stored.

In the inference result storage unit 274, data expressing the result of a design simulation of a construction (the result of inference using a machine learning model) is stored.

In the structure sample storage unit 275, sample data of constructions having various structures to be treated as candidates of the result of a design simulation of a construction is stored. In the sample data, a plurality of structures obtained by varying the shape and physical properties (structural elements) of each unit in the data of a construction treated as a prototype are prepared as candidates of the result of a design simulation. Additionally, physical properties (such as the load-bearing capacity) of each candidate structure are calculated using the numerical analysis technique of the first embodiment and stored in the structure sample storage unit 275.

The machine learning model acquisition unit 211 constructs a machine learning model to be used in a design simulation. The machine learning model constructed at this time is constructed according to the type of design simulation of a construction, and in the present embodiment, is acquired by performing machine learning in which the data of the construction treated as a prototype and the parameters expressing various conditions of the design simulation are treated as the input and structures that fulfill various conditions from among the candidate structures are treated as training data.

The objective data acquisition unit 212 acquires data expressing a prototype of a construction on which to run a design simulation selected in the user terminal 10. Also, the objective data acquisition unit 212 stores the acquired data expressing a prototype of a construction on which to run a design simulation in the objective data storage unit 273.

The optimization parameter acquisition unit 313 acquires parameters expressing the portions of the construction to be optimized and the range of variation that were set on the optimization parameter setting screen of the user terminal 10. Also, the optimization parameter acquisition unit 313 stores the acquired parameters in the parameter storage unit 272.

The weight acquisition unit 314 acquires parameters expressing the weights of attributes for evaluating the construction that were set on the weight setting screen of the user terminal 10. Also, the weight acquisition unit 314 stores the acquired parameters in the parameter storage unit 272.

The optimized performance specification unit 315 calculates a performance value (output of evaluation function) for optimizing an evaluation function expressing the quality of a construction obtained by the design simulation on the basis of the data expressing a prototype of a construction and the parameters expressing the portions of the construction to be optimized and the range of variation that performs the design simulation transmitted from the user terminal 10. Also, the optimized performance specification unit 315 stores the calculated performance value in the parameter storage unit 272. Note that if parameters expressing the weights of attributes for evaluating the construction are acquired by the weight acquisition unit 314, the optimized performance specification unit 315 updates the performance value to reflect the acquired weights.

Here, in the present embodiment, when calculating the performance value for optimizing the evaluation function, the input values (the value of each attribute of the construction) that would cause the value of the evaluation function to reach a global maximum (or a local maximum) under the conditions set for the design simulation are calculated.

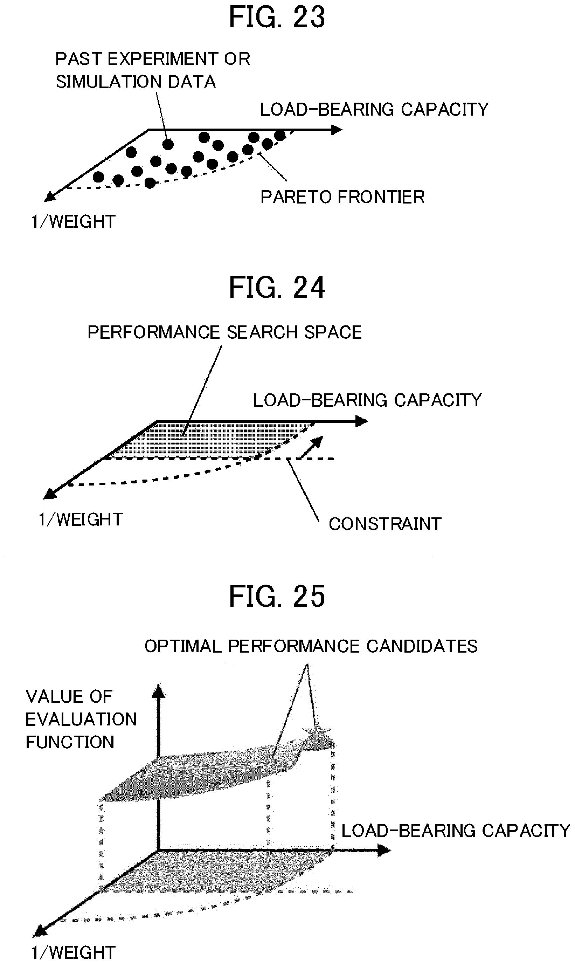

Figure 23 is a schematic diagram illustrating an example of the relationship between the attributes to be optimized and the Pareto frontier (the limit region of the Pareto solution) in a design simulation of a construction.

As illustrated in Figure 23, when a design simulation is run, the limit region of the Pareto solution is specified in the space parameterized by the attributes of the construction to be optimized (in this case, the reciprocal of the weight and the load-bearing capacity), and past experimental or simulation data existing inside the region is treated as a reference for the design simulation.

Figure 24 is a schematic diagram illustrating an example of a state in which a constraint is set on an attribute to be optimized in a design simulation of a construction.

As illustrated in Figure 24, if a constraint is set on an attribute to be optimized, the range of data fulfilling the constraint inside the Pareto frontier is treated as the search space in which to search for a performance value for optimizing the evaluation function.

Figure 25 is a schematic diagram illustrating values of the evaluation function in the space fulfilling the constraint set inside the Pareto frontier.

As illustrated in Figure 25, data in the space expressing the values of the evaluation function can be calculated for each data point fulfilling the constraint set inside the Pareto frontier. Among the values of the evaluation function, the value of each attribute corresponding to a point at a global maximum value (or local maximum value) is the value of each attribute of the optimized construction. In the present embodiment, the attributes of the construction specified in this way are included in the input of a machine learning model, and artificial intelligence is used to infer an optimal structure of the construction.

Returning to Figure 22, the structure inference unit 316 infers the structure of the construction having the performance value calculated by the optimized performance specification unit 315. In the present embodiment, the structure inference unit 316 includes a machine learning model in which the data of the construction treated as a prototype and parameters (such as the demanded specifications (such as weight and the load-bearing capacity) and the weights of an evaluation function) expressing the conditions of a design simulation are treated as the input and a structure inferred to fulfill the conditions of the design simulation from among the candidate structures is treated as the output. Moreover, the structure inference unit 316 inputs various parameters (parameters expressing the conditions of the design simulation) stored in the parameter storage unit 272 and data of a construction to be treated as a prototype which are acquired from the user terminal 10 into the machine learning model, and outputs an optimized structure of a construction according to artificial intelligence.

Note that the structure inference unit 316 stores data expressing the result of a design simulation of a construction (the result of inference using a machine learning model) in the inference result storage unit 274. Also, if downloading is requested by the user terminal 10, the structure inference unit 316 transmits data expressing the result of a design simulation of a construction (the result of inference using a machine learning model) to the user terminal 10.

### [Operations]

Next, the operations of the information processing system 1 will be described.

### [UI control process]

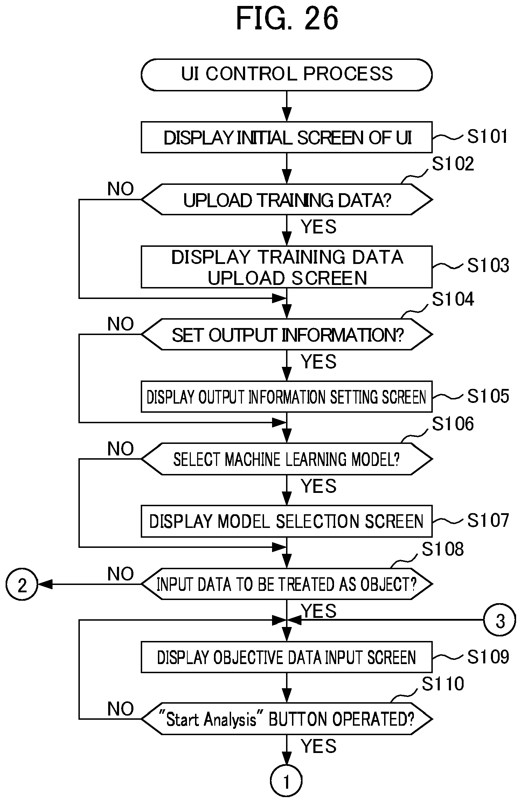

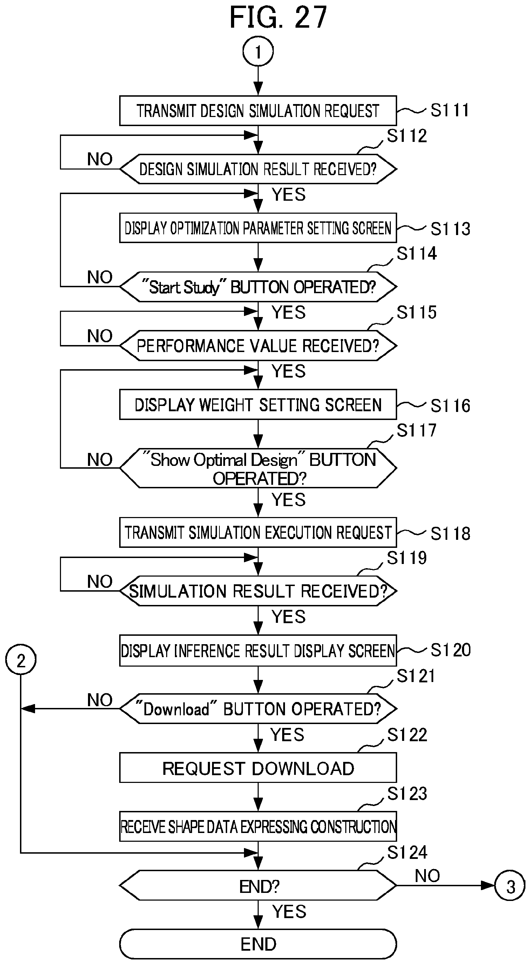

Figures 26 and 27 are flowcharts for describing the flow of a UI control process executed by the user terminal 10.

The UI control process is started in response to the input of an instruction for executing the UI control process via the input unit 815 of the user terminal 10.

When the UI control process is started, in step S101, the UI control unit 111 displays an initial screen of a user interface for running a design simulation of a construction. On the initial screen of the user interface, a menu for inputting and outputting various information for running a design simulation of a construction is displayed.

In step S102, the UI control unit 111 determines whether the user has selected a menu item for uploading training data for constructing a machine learning model to be used in a design simulation of a construction.

If the user has not selected the menu item for uploading training data for constructing a machine learning model to be used in a design simulation of a construction, NO is determined in step S102, and the process proceeds to step S104.

On the other hand, if the user has selected the menu item for uploading training data for constructing a machine learning model to be used in a design simulation of a construction, YES is determined in step S102, and the process proceeds to step S103.

In step S103, the UI control unit 111 displays the training data upload screen. On the training data upload screen, the selection of training data to be used in the construction of a machine learning model and an instruction for transmitting the selected training data to the numerical analysis server 20 are received.

In step S104, the UI control unit 111 determines whether the user has selected a menu item for setting the output information (such as an "optimized structure of a construction", for example) of the machine learning model.

If the user has not selected the menu item for setting the output information of the machine learning model, NO is determined in step S104, and the process proceeds to step S106.

On the other hand, if the user has selected the menu item for setting the output information of the machine learning model, YES is determined in step S104, and the process proceeds to step S105.

In step S105, the UI control unit 111 displays the output information setting screen. On the output information setting screen, a list of parameters selectable as output information in training data to be used in machine learning is displayed, and the selection of a parameter to be set as the output information of the machine learning model is received. Also, on the output information setting screen, if a "Start Learning" button for initiating machine learning is operated, a request for constructing a machine learning model that treats the selected parameter as the output information is transmitted to the numerical analysis server 20.

In step S106, the UI control unit 111 determines whether the user has selected a menu item for selecting a machine learning model to be used in a design simulation of a construction.

If the menu item for selecting a machine learning model to be used in a design simulation of a construction is not selected, NO is determined in step S106, and the process proceeds to step S108.

On the other hand, if the menu item for selecting a machine learning model to be used in a design simulation of a construction is selected, YES is determined in step S106, and the process proceeds to step S107.

In step S107, the UI control unit 111 displays the model selection screen. On the model selection screen, a list of selectable machine learning models is displayed, and the selection of a machine learning model to be used in a design simulation of a construction from among the listed machine learning models is received.

In step S108, the UI control unit 111 determines whether a menu item for inputting data to be treated as the object of a design simulation of a construction (data expressing a prototype of a construction on which to run a design simulation) using a machine learning model is selected.

If the menu item for inputting data to be treated as the object of a design simulation of a construction using a machine learning model is not selected, NO is determined in step S108, and the process proceeds to step S124.

On the other hand, if the menu item for inputting data to be treated as the object of a design simulation of a construction using a machine learning model is selected, YES is determined in step S108, and the process proceeds to step S109.

In step S109, the UI control unit 111 displays the objective data input screen. On the objective data input screen, the selection of data stored in the objective data storage unit 172 as the object of a design simulation of a construction using a machine learning model is received.

In step S110, the UI control unit 111 determines whether a "Start Analysis" button is operated. In other words, it is determined whether a request for a design simulation of a construction is given.

If the "Start Analysis" button is not operated, NO is determined in step S110, and the process proceeds to step S109.

On the other hand, if the "Start Analysis" button is operated, YES is determined in step S110, and the process proceeds to step S111.

In step S111, the data management unit 112 transmits a request for a design simulation of a construction to the numerical analysis server 20.

In step S112, the data management unit 112 determines whether the result of a design simulation of a construction (the result of inference using a machine learning model) is received from the numerical analysis server 20.

If the result of a design simulation of a construction (the result of inference using a machine learning model) is not received from the numerical analysis server 20, NO is determined in step S112, and the process in step S112 is repeated.

On the other hand, if the result of a design simulation of a construction (the result of inference using a machine learning model) is received from the numerical analysis server 20, YES is determined in step S112, and the process proceeds to step S113.

In step S113, the UI control unit 111 displays the optimization parameter setting screen. On the optimization parameter setting screen, the data of a prototype of a construction on which to run a design simulation is displayed as an image, and the input of numerical values for setting the portions of the construction to be optimized and the range of variation are received.

In step S114, the UI control unit 111 determines whether the user has operated a "Start Study" button. The "Start Study" button is a button for causing the numerical analysis server 20 to calculate a performance value for optimizing an evaluation function expressing the quality of a construction obtained from a design simulation.

If the user has not operated the "Start Study" button, NO is determined in step S114, and the process proceeds to step S113.

On the other hand, if the user has operated the "Start Study" button, YES is determined in step S114, and the process proceeds to step S115.

In step S115, the data management unit 112 determines whether a performance value for optimizing an evaluation function expressing the quality of a construction obtained from a design simulation is received from the numerical analysis server 20.

If a performance value for optimizing an evaluation function expressing the quality of a construction obtained from a design simulation is not received from the numerical analysis server 20, NO is determined in step S115, and the process in step S115 is repeated.

On the other hand, if a performance value for optimizing an evaluation function expressing the quality of a construction obtained from a design simulation is received from the numerical analysis server 20, YES is determined in step S115, and the process proceeds to step S116.

In step S116, the UI control unit 111 displays the weight setting screen. On the weight setting screen, the setting of weights for evaluating a construction is received, and the received settings are successively transmitted to the numerical analysis server 20.

In step S117, the UI control unit 111 determines whether a "Show Optimal Design" button is operated. The "Show Optimal Design" button is a button for causing the numerical analysis server 20 to infer the structure of a construction that achieves the calculated performance from a design simulation using a machine learning model.

If the "Show Optimal Design" button is not operated, NO is determined in step S117, and the process proceeds to step S116.

On the other hand, if the "Show Optimal Design" button is operated, YES is determined in step S117, and the process proceeds to step S118.

In step S118, the data management unit 112 transmits a request to execute a design simulation to the numerical analysis server 20.

In step S119, the data management unit 112 determines whether a result of a design simulation (an inferred structure of a construction) is received from the numerical analysis server 20.

If a result of a design simulation (an inferred structure of a construction) is not received from the numerical analysis server 20, NO is determined in step S119, and the process in step S119 is repeated.

On the other hand, if a result of a design simulation (an inferred structure of a construction) is received from the numerical analysis server 20, YES is determined in step S119, and the process proceeds to step S120.

In step S120, the UI control unit 111 displays the inference result display screen. On the inference result display screen, a structure of a construction inferred by the numerical analysis server 20 (an inference result for an optimized construction) is displayed and a "Download" button for downloading shape data (such as CAD data or STL data) expressing the construction according to the inference result to the user terminal 10 is displayed.

In step S121, the UI control unit 111 determines whether the "Download" button is operated.

If the "Download" button is not operated, NO is determined in step S121, and the process proceeds to step S124.

On the other hand, if the "Download" button is operated, YES is determined in step S121, and the process proceeds to step S122.

In step S122, the data management unit 112 requests the numerical analysis server 20 to transmit (download) shape data expressing the construction according to the inference result.

In step S123, the data management unit 112 receives shape data expressing the construction according to the inference result from the numerical analysis server 20.

In step S124, the UI control unit 111 determines whether an instruction for ending the UI control process is given.

If the instruction for ending the UI control process is not given, NO is determined in step S124, and the process proceeds to step S109.

On the other hand, if the instruction for ending the UI control process is given, YES is determined in step S124, and the UI control process ends.

Next, the processes executed by the numerical analysis server 20 will be described.

### [Machine learning model construction process]

The machine learning model construction process in the present embodiment differs from the machine learning model construction process illustrated in Figure 15 in relation to the first embodiment in that, in the process in step S32, machine learning is performed by treating the data of a construction treated as a prototype and parameters expressing various conditions of the design simulation as input and treating a structure that fulfills the various conditions from among candidate structures as the output while optimizing the affine transformation matrix A.

Note that the other steps are similar to the machine learning model construction process illustrated in Figure 15 in relation to the first embodiment.

### [Design simulation process]

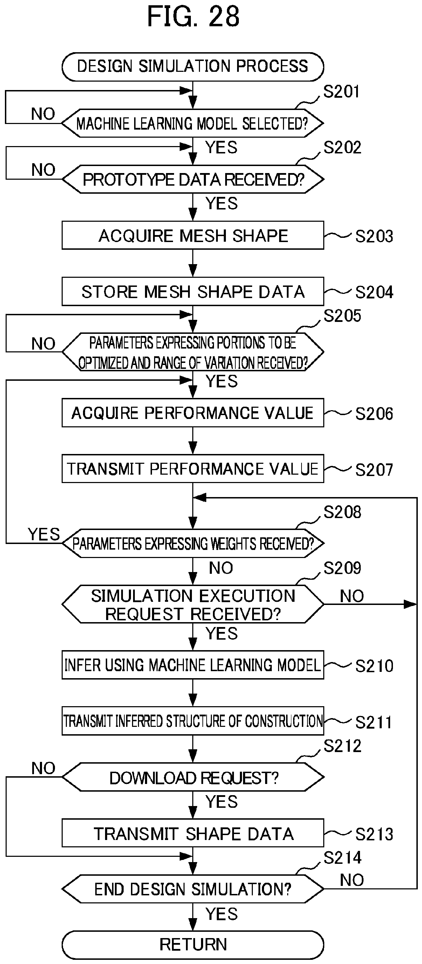

Figure 28 is a flowchart illustrating the flow of a design simulation process executed by the numerical analysis server 20.

The design simulation process is started together with the bootup of the numerical analysis server 20 and executed repeatedly.

When the design simulation process is started, in step S201, the machine learning model acquisition unit 211 determines whether the user terminal 10 has selected a machine learning model to be used in a design simulation of a construction.

If the user terminal 10 has not selected a machine learning model to be used in a design simulation of a construction, NO is determined in step S201, and the process in step S201 is repeated.

On the other hand, if the user terminal 10 has selected a machine learning model to be used in a design simulation of a construction, YES is determined in step S201, and the process proceeds to step S202.

In step S202, the objective data acquisition unit 212 determines whether data expressing a prototype of a construction on which to run a design simulation is received from the user terminal 10.

If data expressing a prototype of a construction on which to run a design simulation is not received from the user terminal 10, NO is determined in step S202, and the process in step S202 is repeated.

On the other hand, if data expressing a prototype of a construction on which to run a design simulation is received from the user terminal 10, YES is determined in step S202, and the process proceeds to step S203.

In step S203, the objective data acquisition unit 212 acquires a mesh shape of the data expressing a prototype of a construction on which to run a design simulation that was uploaded from the user terminal 10. Note that in the case where the data expressing a prototype of a construction on which to run a design simulation that was uploaded from the user terminal 10 is data of a mesh shape, the process in step S203 can be skipped.

In step S204, the objective data acquisition unit 212 stores the data of the mesh shape expressing a prototype of a construction on which to run a design simulation in the objective data storage unit 273. Note that in the case where the information processing system 1 makes inferences by using a machine learning model obtained by performing machine learning as a 1D model, the processes in steps S203 and S204 can be skipped.

In step S205, the optimization parameter acquisition unit 313 determines whether parameters expressing the portions of the construction to be optimized and the range of variation that were set on the optimization parameter setting screen of the user terminal 10 are received.

If parameters expressing the portions of the construction to be optimized and the range of variation that were set on the optimization parameter setting screen of the user terminal 10 are not received, NO is determined in step S205, and the process in step S205 is repeated.

On the other hand, if parameters expressing the portions of the construction to be optimized and the range of variation that were set on the optimization parameter setting screen of the user terminal 10 are received, YES is determined in step S205, and the process proceeds to step S206.

In step S206, the optimized performance specification unit 215 calculates (acquires) a performance value for optimizing an evaluation function expressing the quality of a construction obtained by the design simulation on the basis of the data expressing a prototype of a construction and the parameters expressing the portions of the construction to be optimized and the range of variation performing the design simulation. Note that the calculated performance value is stored in the parameter storage unit 272.

In step S207, the optimized performance specification unit 215 transmits the calculated performance value for optimizing an evaluation function expressing the quality of a construction obtained by the design simulation to the user terminal 10.

In step S208, the weight acquisition unit 214 determines whether parameters expressing the weights of attributes for evaluating a construction are received.

If parameters expressing the weights of attributes for evaluating a construction are received, YES is determined in step S208, and the process proceeds to step S206. With this arrangement, the performance value for optimizing an evaluation function expressing the quality of a construction is updated to a performance value reflecting the weights of the attributes for evaluating the construction.

On the other hand, if parameters expressing the weights of attributes for evaluating a construction are not received, NO is determined in step S208, and the process proceeds to step S209.

In step S209, the structure inference unit 216 determines whether a request to execute a design simulation is received.

If a request to execute a design simulation is not received, NO is determined in step S209, and the process proceeds to step S208.

On the other hand, if a request to execute a design simulation is received, YES is determined in step S209, and the process proceeds to step S210.

In step S210, the structure inference unit 216 uses a machine learning model to infer the structure of the construction having the performance value calculated by the optimized performance specification unit 215. Note that the data of the inferred structure of the construction is stored in the objective data storage unit 273.

In step S211, the structure inference unit 216 transmits the inferred structure of the construction (result of the design simulation) to the user terminal 10.

In step S212, the structure inference unit 216 determines whether the user terminal 10 has requested to download shape data expressing the construction according to the inference result.

If the user terminal 10 has not requested to download shape data expressing the construction according to the inference result, NO is determined in step S212, and the process proceeds to step S214.

On the other hand, if the user terminal 10 has requested to download shape data expressing the construction according to the inference result, YES is determined in step S212, and the process proceeds to step S213.

In step S213, the structure inference unit 216 transmits shape data expressing the construction according to the inference result to the user terminal 10.

In step S214, the structure inference unit 216 determines whether the design simulation of a construction requested by the user terminal 10 has ended. The determination of whether the design simulation of a construction requested by the user terminal 10 has ended can be made on the basis of a notification or the like indicating the end of the design simulation transmitted from the user terminal 10, for example.

If the design simulation of a construction requested by the user terminal 10 has not ended, NO is determined in step S214, and the process proceeds to step S208.

On the other hand, if the design simulation of a construction requested by the user terminal 10 has ended, YES is determined in step S215, and the design simulation process is repeated.

As above, the information processing system 1 according to the present embodiment prepares a plurality of structures as candidates by varying the shape and physical properties (structural elements) of each portion in the data of a construction that is treated as a prototype, and calculates the physical properties (such as the load-bearing capacity) of each candidate structure. Thereafter, a machine learning model is applied by treating the data of the construction treated as a prototype and parameters (such as the demanded specifications (such as weight and the load-bearing capacity) and the weights of an evaluation function) expressing the conditions of a design simulation as the input to thereby output a structure inferred to fulfill the conditions of the design simulation from among the candidate structures.

With this arrangement, a structure that is optimized with respect to the conditions of the design simulation can be inferred in a short amount of time, and even if the conditions of the design simulation are modified, a structure corresponding to the modified conditions can be inferred rapidly.

Consequently, according to the information processing system according to the present embodiment, the design simulation of a construction can be performed flexibly and quickly.

### [Modification 1]

In the second embodiment, when specifying settings related to the optimization of a construction, the optimization parameter setting screen illustrated in Figure 18 is displayed and parameters expressing the portions of the construction to be optimized and the range of variation are set, but the configuration is not limited thereto. That is, when specifying settings related to the optimization of a construction, the relationship between the attributes to be optimized and the Pareto frontier (the limit region of the Pareto solution) as illustrated in Figure 23 may be displayed on the screen, and the direction and magnitude of the parameters to be varied may be set within the Pareto frontier. In this case, a structure that corresponds to the direction and magnitude of the parameters set for the attributes of the construction to be optimized is newly inferred.

Accordingly, variations of the attributes to be optimized can be set in a way that is easily understood visually.

### [Modification 2]

In the first and second embodiments, the information processing system 1 is described as being configured as a client-server system, but the configuration is not limited thereto. That is, the functions of the information processing system 1 can be implemented in a single information processing apparatus and thereby configured as a standalone system.

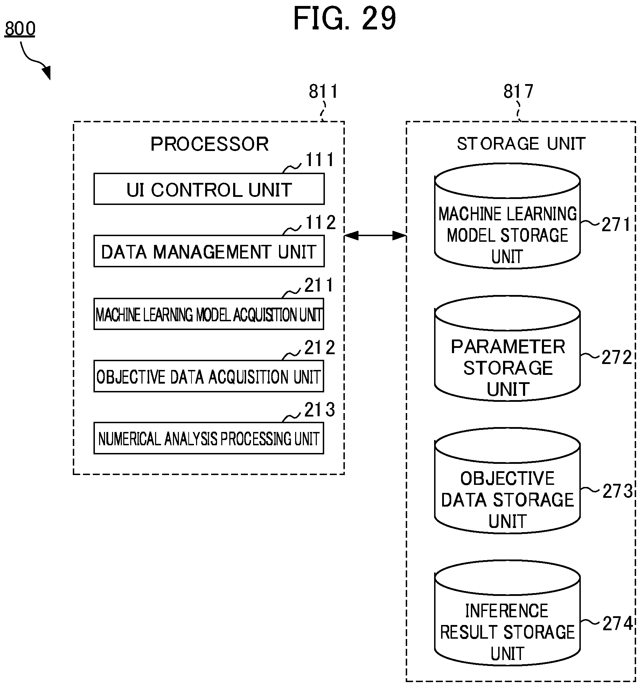

Figure 29 is a block diagram illustrating a functional configuration in the case where the functions of the information processing system 1 in the first embodiment are implemented in a single information processing apparatus 800.

As illustrated in Figure 29, in the case where the functions of the information processing system 1 in the first embodiment are implemented in a single information processing apparatus 800, the processor 811 functions as the UI control unit 111 and the data management unit 112 of the user terminal 10 and as the machine learning model acquisition unit 211, the objective data acquisition unit 212, and the numerical analysis processing unit 213 of the numerical analysis server 20. Also, the machine learning model storage unit 271, the parameter storage unit 272, the objective data storage unit 273, and the inference result storage unit 274 of the numerical analysis server 20 are formed in the storage unit 817.

Such a configuration makes it possible to achieve substantially the same functions as the information processing system 1 of the first embodiment in a mode of use that does not connect to a network, according to the needs of the user.

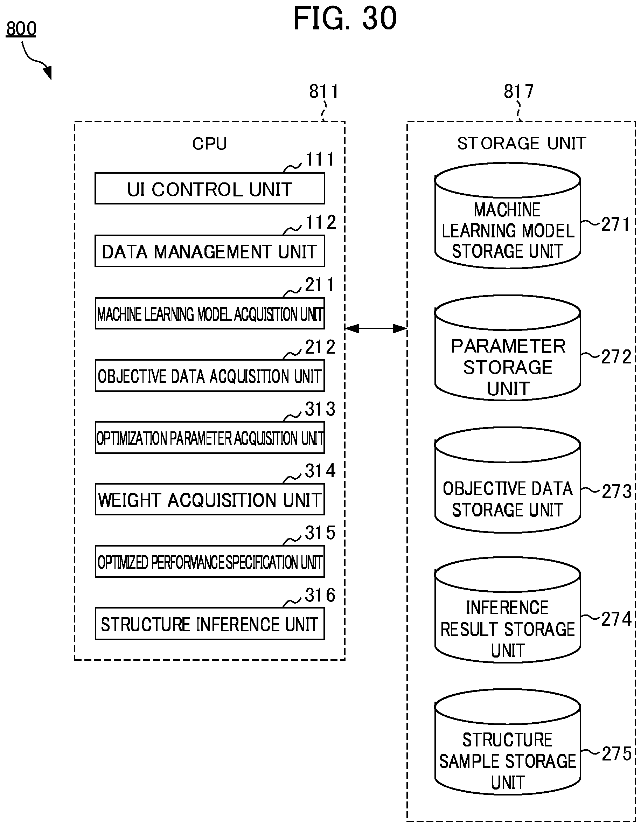

Also, Figure 30 is a block diagram illustrating a functional configuration in the case where the functions of the information processing system 1 in the second embodiment are implemented in a single information processing apparatus 800.

As illustrated in Figure 30, in the case where the functions of the information processing system 1 in the second embodiment are implemented in a single information processing apparatus 800, the processor 811 functions as the UI control unit 111 and the data management unit 112 of the user terminal 10 and as the machine learning model acquisition unit 211, the objective data acquisition unit 212, the optimization parameter acquisition unit 313, the weight acquisition unit 314, the optimized performance specification unit 315, and the structure inference unit 316 of the numerical analysis server 20. Also, the machine learning model storage unit 271, the parameter storage unit 272, the objective data storage unit 273, the inference result storage unit 274, and the structure sample storage unit 275 of the numerical analysis server 20 are formed in the storage unit 817.

Such a configuration makes it possible to achieve substantially the same functions as the information processing system 1 of the second embodiment in a mode of use that does not connect to a network, according to the needs of the user.

### [Modification 3]

In the first and second embodiments, the machine learning model acquisition unit 211 of the numerical analysis server 20 is described as executing the process of constructing a machine learning model, but the configuration is not limited thereto. That is, the process of constructing a machine learning model may also be executed in an apparatus other than the numerical analysis server 20, and the machine learning model acquisition unit 211 of the numerical analysis server 20 may acquire the constructed machine learning model.

This arrangement makes it possible to reduce the processing load on the numerical analysis server 20 that performs numerical analysis of physical properties or runs a design simulation of a construction, and also allow diverse machine learning models constructed by a variety of apparatuses to be selected and used.

As above, the information processing system 1 according to an embodiment of the present invention is provided with the objective data acquisition unit 212 and the numerical analysis processing unit 213 (or structure inference unit 316).

The objective data acquisition unit 212 acquires data of the object of numerical analysis (or a design simulation of a construction) expressed as a mesh shape.

The numerical analysis processing unit 213 (or structure inference unit 316) uses a machine learning model obtained by performing machine learning on the result of numerical analysis of physical properties (or a design simulation of a construction) in units of relationships between two adjacent nodes in graph data corresponding to a mesh shape to acquire an inference result inferring a result of numerical analysis (or a result of a design simulation of a construction) for the object of numerical analysis (or a design simulation of a construction).

This arrangement makes it possible to use machine learning to perform numerical analysis (or a design simulation of a construction) appropriately.

Also, for each piece of data expressing a relationship between a node of interest and an adjacent node, the numerical analysis processing unit 213 (or structure inference unit 316) inputs input data into an affine transformation matrix in the machine learning model and consolidates the output of the machine learning model for a plurality of nodes to acquire an inference result inferring a result of numerical analysis (or a result of a design simulation of a construction).

This arrangement makes it possible to perform machine learning by repeatedly using an affine transformation matrix of the same size, and thereby use machine learning to perform numerical analysis (or a design simulation of a construction) appropriately.

Also, the graph data corresponding to the mesh shape includes graph data composed of nodes and edges expressing the mesh shape and graph data in which data about physical properties is assigned to at least one of the nodes or edges.

With this arrangement, in the case where the nodes of the mesh shape hold a plurality of physical properties as elements, a machine learning model can be applied to the graph data expressing these physical properties to infer a result of numerical analysis (or a result of a design simulation of a construction).

Also, the data of the object of numerical analysis expressed as the mesh shape is data of the object of a simulation.

The numerical analysis processing unit 213 (or structure inference unit 316) acquires, as a result of numerical analysis, the result of a forward calculation in which a resulting state from an initial state in the object of the simulation is analyzed as a forward simulation problem.

This arrangement makes it possible to infer a numerical analysis result using machine learning with respect to a forward simulation problem.

Also, the data of the object of numerical analysis expressed as the mesh shape is data of the object of a simulation.

The numerical analysis processing unit 213 (or structure inference unit 316) acquires, as a result of numerical analysis, the result of an inverse calculation in which the conditions for reaching a resulting state in the object of the simulation are analyzed as an inverse simulation problem.

This arrangement makes it possible to infer a numerical analysis result using machine learning with respect to an inverse simulation problem.

Also, the numerical analysis processing unit 213 (or structure inference unit 316) acquires, as a result of numerical analysis (or a result of a design simulation of a construction), post-analysis graph data corresponding to the mesh shape expressing the object of numerical analysis (or a design simulation of a construction).

This arrangement makes it possible to use machine learning to perform numerical analysis (or a design simulation of a construction) in the case where the analysis result is expressed as graph data.

Also, the numerical analysis processing unit 213 (or structure inference unit 316) acquires, as a result of numerical analysis, vector data whose elements are post-analysis physical quantities of the overall object of numerical analysis.

This arrangement makes it possible to use machine learning to perform numerical analysis (or a design simulation of a construction) in the case where the analysis result is expressed as vector data.

Also, the information processing system 1 according to an embodiment of the present invention is provided with the optimization parameter acquisition unit 313, the optimized performance specification unit 315, and the structure inference unit 316.

The optimization parameter acquisition unit 313 sets parameters to be optimized in a range of performance that is achievable with respect to the demanded specifications of a construction to be designed.

The optimized performance specification unit 315 acquires an evaluation value expressed by an evaluation function of the designed construction with respect to the parameters to be optimized.

The optimized performance specification unit 315 acquires a specific evaluation value corresponding to at least one of a global maximum value or a local maximum value of the evaluation value.

The structure inference unit 316 acquires an inference result obtained by using a machine learning model to infer the structure of a construction according to the parameters to be optimized which correspond to the specific evaluation value.

This arrangement makes it possible to run a design simulation of a construction flexibly and quickly.

The structure inference unit 316 applies the machine learning model in which data about a construction to be designed and parameters expressing the conditions of the design simulation are treated as the input, and thereby acquires the inference result inferring the structure of a construction that conforms to the parameters to be optimized which correspond to the specific evaluation value from among a plurality of structures obtained by varying structural elements of the construction to be designed.

With this arrangement, a structure that is optimized with respect to the conditions of the design simulation can be inferred in a short amount of time, and even if the conditions of the design simulation are modified, a structure corresponding to the modified conditions can be inferred rapidly.

The present invention is not to be limited to the above-described embodiment. Various changes, modifications, etc. are also covered by the present invention as long as such changes, modifications, etc. fall in a range in which the object of the present invention can be achieved.

For instance, the system configuration of the information processing system 1 in the embodiments described above is an example, and the functions of the numerical analysis server 20 may also be distributed among more servers and implemented insofar as the functions of the information processing system 1 as a whole are achieved.

Moreover, in the embodiments and modifications described above, inferring a result of numerical analysis of physical properties or a structure of a construction includes executing the inference in the apparatus itself, but also includes requesting another apparatus to execute the inference and acquiring the result therefrom.

The processing sequence described above can be executed by hardware, and can also be executed by software.

In other words, the functional configuration in the embodiment described above is merely exemplary, and is not particularly limited. That is, any configuration may be employed as long as a function, which enables the series of processes described above to be performed as a whole, is included in any computer included in the information processing system 1. What kinds of functional blocks are used to implement this function is not limited to the example described specifically.

A single functional block may be configured by a single piece of hardware, a single installation of software, or a combination thereof.

A recording medium including a program for performing the series of processes described above is configured not only by using a removable medium, which is distributed separately from the apparatus body to provide the program to a user, but also, for example, by using a recording medium provided to a user in a state in which the recording medium is pre-installed in the apparatus body.

As described above, the embodiment of the present invention is described. The present invention is not limited to the embodiment described above. The effects described in the present embodiment are merely a list of the most preferable effects produced from the present invention. The effects of the present invention are not limited to those described in the present embodiment.

### [Reference Signs List]

1 information processing system, 10 user terminal, 20 numerical analysis server, 30 network, 800 information processing apparatus, 811 processor, 812 ROM, 813 RAM, 814 bus, 815 input unit, 816 output unit, 817 storage unit, 818 communication unit, 819 drive, 820 image capture unit, 831 removable medium, 111 UI control unit, 112 data management unit, 171, 272 parameter storage unit, 172, 273 objective data storage unit, 173, 274 inference result storage unit, 211 machine learning model acquisition unit, 212 objective data acquisition unit, 213 numerical analysis processing unit, 313 optimization parameter acquisition unit, 314 weight acquisition unit, 315 optimized performance specification unit, 316 structure inference unit, 271 machine learning model storage unit

## Claims

1. An information processing system comprising:
objective data acquisition means that acquires data of an object of numerical analysis expressed as a mesh shape; and
inference means that uses a machine learning model obtained by performing machine learning on a result of numerical analysis of physical properties in units of relationships between two adjacent nodes in graph data corresponding to the mesh shape to acquire an inference result inferring a result of numerical analysis for the object of numerical analysis.

2. The information processing system according to claim 1, wherein, for each piece of data expressing a relationship between a node of interest and an adjacent node, the inference means inputs input data into an affine transformation matrix in the machine learning model and consolidates the output of the machine learning model for a plurality of nodes to acquire the inference result inferring the result of numerical analysis.

3. The information processing system according to claim 1 or 2, wherein the graph data corresponding to the mesh shape includes graph data composed of nodes and edges expressing the mesh shape and graph data in which data about physical properties is assigned to at least one of the nodes or edges.

4. The information processing system according to any one of claims 1 to 3, wherein
the data of the object of numerical analysis expressed as the mesh shape is data of an object of a simulation, and
the inference means acquires, as the result of numerical analysis, a result of a forward calculation in which a resulting state from an initial state in the object of the simulation is analyzed as a forward simulation problem.

5. The information processing system according to any one of claims 1 to 3, wherein
the data of the object of numerical analysis expressed as the mesh shape is data of an object of a simulation, and
the inference means acquires, as the result of numerical analysis, a result of an inverse calculation in which conditions for reaching a resulting state in the object of the simulation is analyzed as an inverse simulation problem.

6. The information processing system according to any one of claims 1 to 5, wherein the inference means acquires, as the result of numerical analysis, post-analysis graph data corresponding to the mesh shape expressing the object of numerical analysis.

7. The information processing system according to any one of claims 1 to 5, wherein the inference means acquires, as the result of numerical analysis, vector data whose elements are post-analysis physical quantities of the overall object of numerical analysis.

8. An information processing system comprising:
optimization parameter setting means that sets parameters to be optimized in a range of performance that is achievable with respect to demanded specifications of a construction to be designed;
evaluation value acquisition means that acquires an evaluation value expressed by an evaluation function of a designed construction with respect to the parameters to be optimized;
specific evaluation value acquisition means that acquires a specific evaluation value corresponding to at least one of a global maximum value or a local maximum value of the evaluation value; and
structure inference means that acquires an inference result obtained by using a machine learning model to infer a structure of a construction according to the parameters to be optimized which correspond to the specific evaluation value.

9. The information processing system according to claim 8, wherein the structure inference means applies the machine learning model in which data about a construction to be designed and parameters expressing conditions of a design simulation are treated as input, and thereby acquires the inference result inferring the structure of a construction that conforms to the parameters to be optimized which correspond to the specific evaluation value from among a plurality of structures obtained by varying structural elements of the construction to be designed.

10. An information processing method executed in an information processing system, the information processing method comprising:
an objective data acquisition step for acquiring data of an object of numerical analysis expressed as a mesh shape; and
an inference step for using a machine learning model obtained by performing machine learning on a result of numerical analysis of physical properties in units of relationships between two adjacent nodes in graph data corresponding to the mesh shape to acquire an inference result inferring a result of numerical analysis for the object of numerical analysis.

11. An information processing method executed in an information processing system,
an optimization parameter setting step for setting parameters to be optimized in a range of performance that is achievable with respect to demanded specifications of a construction to be designed;
an evaluation value acquisition step for acquiring an evaluation value expressed by an evaluation function of a designed construction with respect to the parameters to be optimized;
a specific evaluation value acquisition step for acquiring a specific evaluation value corresponding to at least one of a global maximum value or a local maximum value of the evaluation value; and
a structure inference step for acquiring an inference result obtained by using a machine learning model to infer a structure of a construction according to the parameters to be optimized which correspond to the specific evaluation value.

12. A program that causes a computer to achieve:
an objective data acquisition function that acquires data of an object of numerical analysis expressed as a mesh shape; and
an inference function that uses a machine learning model obtained by performing machine learning on a result of numerical analysis of physical properties in units of relationships between two adjacent nodes in graph data corresponding to the mesh shape to acquire an inference result inferring a result of numerical analysis for the object of numerical analysis.

13. A program that causes a computer to achieve:
an optimization parameter setting function that sets parameters to be optimized in a range of performance that is achievable with respect to demanded specifications of a construction to be designed;
an evaluation value acquisition function that acquires an evaluation value expressed by an evaluation function of a designed construction with respect to the parameters to be optimized;
a specific evaluation value acquisition function that acquires a specific evaluation value corresponding to at least one of a global maximum value or a local maximum value of the evaluation value; and
a structure inference function that acquires an inference result obtained by using a machine learning model to infer a structure of a construction according to the parameters to be optimized which correspond to the specific evaluation value.
